# EUROPEAN PATENT APPLICATION

(11) **EP 1 736 983 A1**
(43) Date of publication of application: **27.12.2006**
(21) Application number: 05721486.8
(22) Date of filing: 25.03.2005
(51) Int. Cl.: G11B 17/26

(54) **RECORDING MEDIUM REPRODUCER**

(30) Priority: 31.03.2004 JP 2004108181
(71) Applicant: Pioneer Corporation, Tokyo 153-8654 (JP); Tohoku Pioneer Corporation, Tendo-shi, Yamagata 994-8585 (JP)
(72) Inventor: SAITOU, Kazuhiro, c/o Tohoku Pioneer Corporation, Tendo-shi, Yamagata 9948585 (JP); SUZUKI, Toru, c/o Pioneer Corporation, Kawagoe-shi, Saitama 3508555 (JP); TAKAHASHI, Hideaki, c/o Pioneer Corporation, Kawagoe-shi, Saitama 3508555 (JP); MUTO, Akihiro, c/o Pioneer Corporation, Kawagoe-shi, Saitama 3508555 (JP); SHIMOSAWA, Ryosuke, c/o Pioneer Corporation, Kawagoe-shi, Saitama 3508555 (JP); MIZOGUCHI, Takashi, c/o Pioneer Corporation, Kawagoe-shi, Saitama 3508555 (JP)
(74) Representative: Pfau, Anton Konrad
(86) International application number: PCT/JP2005/005559
(87) International publication number: WO 2005/098850

(57) **Abstract**

The present invention is to provide a playback apparatus for assuredly guiding a disk shape recording medium to a holder. A CD changer 1 has a main body 3, a holder 19, and a guiding mechanism 91. The main body 3 has a slot 10 for inserting or removing a CD 2. The holder 19 has a holder body 80 and a locking member 82. The holder body 80 has a C-shaped retainer 84 and a flange 85. The locking member 82 is disposed at an end 80b of the holder body 80 and locked to the CD 2. The guiding mechanism 91 has an arm main body 92 and a guiding part 94. The arm main body 92 is disposed rotatably. The guiding part 94 projects inwardly from an inner edge 85a of the flange 85 when the CD 2 is inserted. The guiding part 94 has a pair of guiding projections 96. The guiding projections 96 position an outer edge of the CD and the locking member therebetween. The guiding projections 96, or the guiding mechanism 91, guide the CD to the holder 19.

## Description

### Technical Field

The present invention relates to a playback apparatus for reproducing an information stored in a disk shape recording medium received in the playback apparatus.

### Related Art

JP,2002-304800,A discloses a playback apparatus for reproducing an information of a disk shape recording medium selected from a plurality of recording media such as compact disk, hereafter denoted as CD, stored in the playback apparatus. The playback apparatus disposed in a motor vehicle has a main body, a plurality of holders, a driving mechanism, and an optical pickup.

The main body is box-shaped. The holder is formed in a flat shape and holds a disk shape recording medium. The plurality of the holders are received in the main body and slidably superposed each other.

The driving mechanism moves the plurality of the holders in a direction to be superimposed each other and separate the holder holding or ejecting the disk shape recording medium. The driving mechanism separates the holder holding a playback disk from other holders.

The optical pickup reproduces an information of the disk shape recording medium selected from the plurality of the disks.

Smaller size of the playback apparatus is required. The applicant of the present invention discloses a C-shaped holder main body and a holder. The holder has a locking member disposed both sides and the center of the holder main body and locked to an outer edge of the disk shape recording medium.

However, when the above described holder is utilized, a large distance between a slot and the holder main body of the holder causes a difficulty for guiding the disk to the holder.

### Disclosure of the Invention

An object of the present invention is to provide a playback apparatus including a main body having a slot for loading a disk shape recording medium, a holder disposed in the main body and holding the disk shape recording medium, and a guiding mechanism for guiding the disk shape recording medium to the holder when the disk shape recording medium is loaded into the main body through the slot.

### Brief Description of the Drawings

FIG. 1 is a perspective view showing an appearance of a CD changer as a playback apparatus according to an embodiment of the present invention;
FIG. 2 is a perspective view showing a fixed chassis, a disk loader, a playback part, a disk receiver, and a separating mechanism mounted on the CD changer of FIG. 1;
FIG. 3 is a partially exploded perspective view showing the fixed chassis, the playback part, and the disk receiver;
FIG. 4 is a perspective view showing the disk receiver and a driving chassis of FIG. 3 assembled with each other;
FIG. 5 is a perspective view showing holders of the disk receiver of Fig. 2 and a spaced groove expansion mechanism;
FIG. 6 is an expanded perspective view showing the spaced groove expansion mechanism;
FIG. 7 is a perspective view showing a moving member of the spaced groove expansion mechanism of being farthest away from a second wall, and a projection of the holder facing a guiding groove;
FIG. 8 is a perspective view showing the projection positioned on a playback part of the guiding groove by rotating a cam member of the spaced groove expansion mechanism;
FIG. 9 is a perspective view showing the cam member of the spaced groove expansion mechanism being closest to a second wall, and the projection of the selected holder facing a guiding groove;
FIG. 10 is a perspective view showing the projection positioned on a loading part of the guiding groove by rotating the cam member of the spaced groove expansion mechanism;
FIG. 11 is an expanded perspective view showing the spaced groove expansion mechanism of FIG. 6;
FIG. 12 is a perspective view showing the cam member and the moving member of the spaced groove expansion mechanism positioned at the uppermost position;
FIG. 13 is a perspective view showing the moving member of the spaced groove expansion mechanism positioned at the uppermost position, and the cam member positioned at the center position;
FIG. 14 is an exploded perspective view showing the spaced groove expansion mechanism of FIG. 11;
FIG. 15 is a perspective view showing a holder of the CD changer of FIG. 1;
FIG. 16 is an expanded perspective view showing an essential portion of the holder and a guiding mechanism of the CD changer of FIG. 1;
FIG. 17 is a sectional view taken along lines 17-17 of FIG. 16;
FIG. 18 is a sectional view taken along lines 18-18 of FIG. 16;
FIG. 19 is an exploded view in a circumferential direction showing the cam member, the rotating member, and the moving member of the spaced groove expansion mechanism of FIG. 6;
FIG. 20 is an exploded schematic view showing the guiding groove of the cam member facing the projection of the selected holder;
FIG. 21 is an exploded schematic view showing the cam member rotated from a state in FIG. 20, and the projection beginning to be inserted into the guiding groove;
FIG. 22 is an exploded view showing the cam member rotated from a state in FIG. 21, and the projection positioned in the loading part of the guiding groove;
FIG. 23 is an exploded view showing the cam member rotated from a state in FIG. 22, and the projection positioned in a pickup insertion part of the guiding groove;
FIG. 24 is an exploded view showing the cam member rotated from a state in FIG. 23, and the projection positioned in the clamp part of the guiding groove;
FIG. 25 is an exploded view showing the cam member rotated from a state in FIG. 24, and the projection positioned in the playback part of the guiding groove;
FIG. 26 is an exploded view showing the projection of the second holder from the bottom as shown in FIG. 25 positioned in the playback part of the guiding groove;
FIG. 27 is an exploded view showing the projection of the second holder from the top as shown in FIG. 25 positioned in the playback part of the guiding groove;
FIG. 28 is an exploded schematic view showing the cam member in FIG. 19 positioned at the closest position to the second wall;
FIG. 29 is an exploded schematic view showing the projection of the selected holder facing the guiding groove of the cam member in FIG. 28;
FIG. 30 is an exploded view showing the cam member rotated from a state in FIG. 29, and the projection beginning to be inserted into the guiding groove;
FIG. 31 is an exploded view showing the cam member rotated from a state in FIG. 30, and the projection positioned in the loading part of the guiding groove;
FIG. 32 is an exploded view showing the projection of the second holder from the top as shown in FIG. 31 positioned in the loading part of the guiding groove;
FIG. 33 is an exploded view showing the projection of the second holder from the bottom as shown in FIG. 31 positioned in the loading part of the guiding groove;
FIG. 34 is a plan view showing a cooperative moving mechanism of FIG. 19;
FIG. 35 is a plan view showing the cooperative moving mechanism of FIG. 20;
FIG. 36 is a plan view showing the cooperative moving mechanism of FIG. 26;
FIG. 37 is a plan view showing the cooperative moving mechanism of FIG. 27;
FIG. 38 is a plan view showing a cooperative moving mechanism in FIG. 28;
FIG. 39 is a plan view showing the cooperative moving mechanism in FIG. 29;
FIG. 40 is a plan view showing the cooperative moving mechanism in FIG. 32;
FIG. 41 is a plan view showing the cooperative moving mechanism in FIG. 33;
FIG. 42 is a plan view showing the holder and a guiding mechanism of the CD changer of FIG. 1;
FIG. 43 is a plan view showing the CD beginning to be inserted into the CD changer;
FIG. 44 is a plan view showing the CD further inserted into the CD changer from a state in FIG. 43;
FIG. 45 is a plan view showing the CD of FIG. 44 held in the holder;
FIG. 46 is a sectional view showing the CD contacted with a tapered face of the guiding projection of FIG. 18; and
FIG. 47 is a sectional view showing the CD of FIG. 46 positioned between the guiding projections.

### Best Mode for Carrying out the Invention

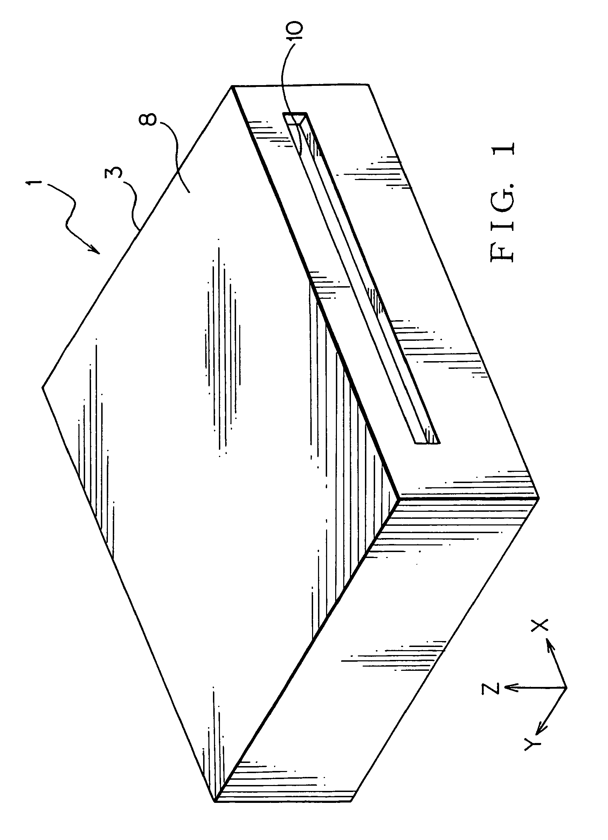

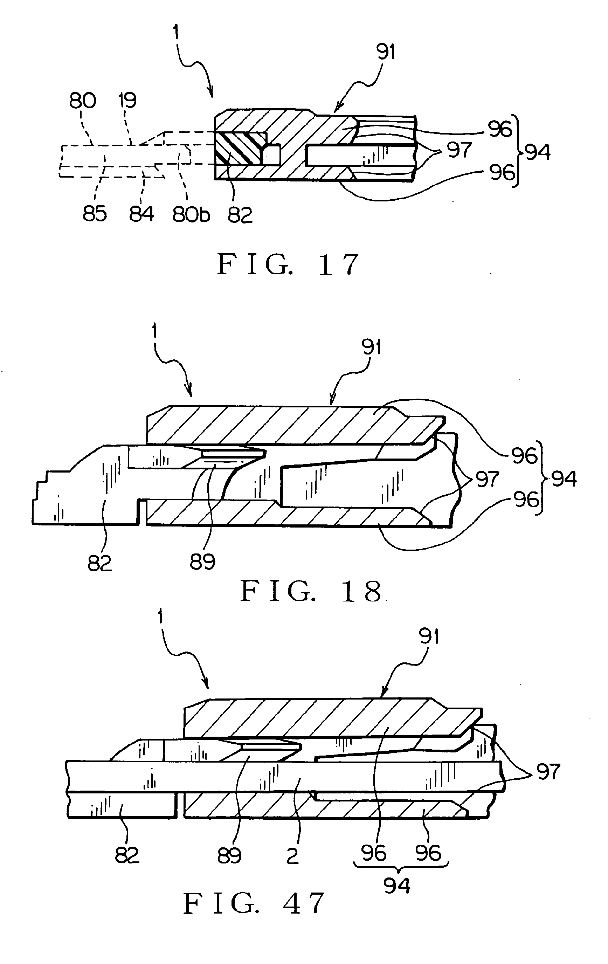

An embodiment of a CD changer 1 for a playback apparatus of the present invention is described by referring to FIGS. 1-47.

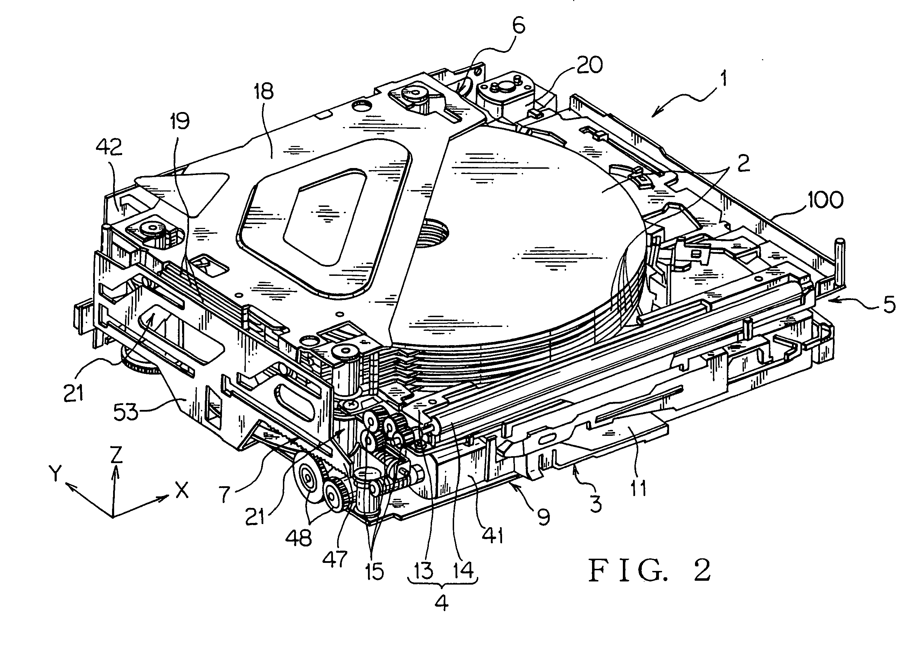

As shown in FIG. 1, the CD changer 1 is mounted on a motor vehicle or the like, receives a plurality of CD 2 (shown in FIG. 2), reads (plays back) data of a selected CD 2, and outputs the data as a sound signal. The CD 2 has a disk shape recording medium to be read by electronic equipment such as a computer.

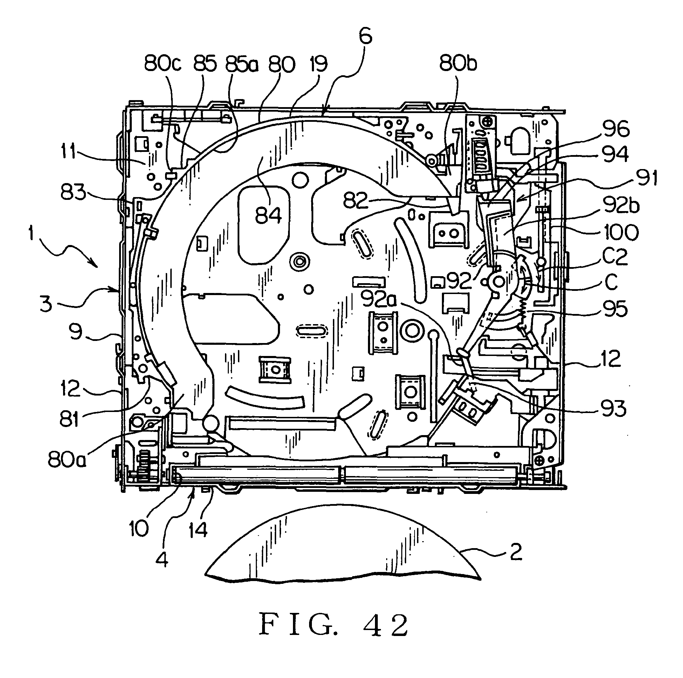

As shown in FIG. 2, the CD changer 1 includes a main body 3 (shown in FIG. 1), an operation panel (not shown), a disk loader 4, a playback part 5, a disk receiver 6, and a guiding mechanism 91 (shown in FIG. 42).

Hereafter, directions of width, length, thickness of the CD changer 1 are respectively defined as arrows X, Y, Z of FIG. 2.

The main body 3 of the playback apparatus includes an outer case 8 made of metal plate as shown in FIG. 1, and a fixed chassis 9 made of metal plate as shown in FIG. 2. The outer case 8 is formed in a flat box shape. A slot 10 through which the CD 2 is inserted and ejected is disposed on the outer case 8. The slot 10 is a through-hole on an outer wall of the outer case 8. The CD 2 can be inserted through the slot 10. The CD 2 can be inserted into and ejected from the outer case 8 of the main body 3 through the slot 10.

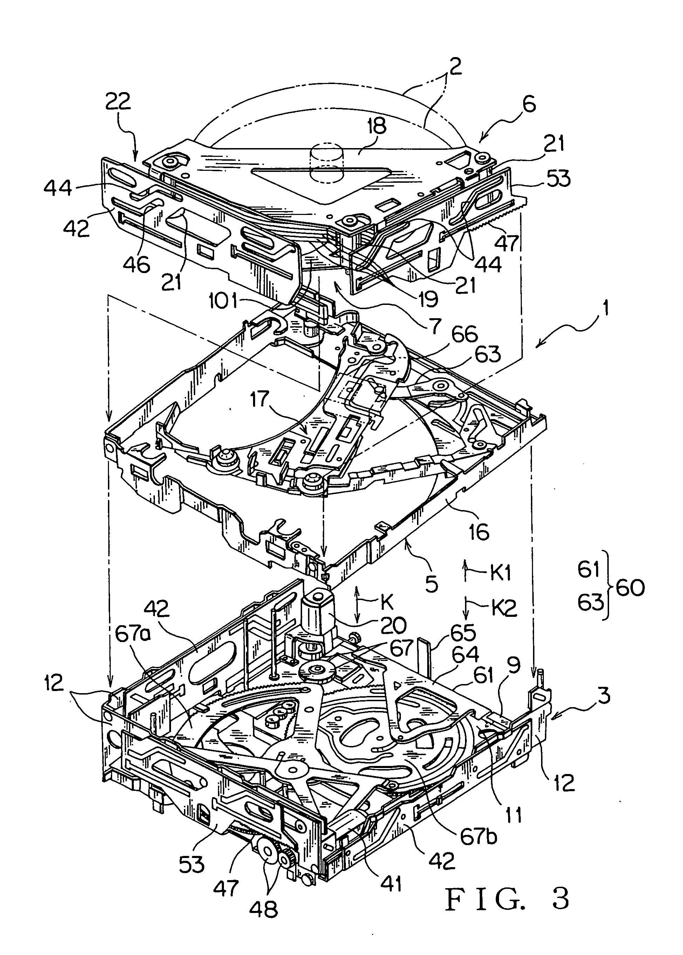

The fixed chassis 9 is received in and fixed to the outer case 8. As shown in FIG. 3, the fixed chassis 9 includes a plate-shaped bottom wall 11 and side walls 12 extending vertically from the bottom wall 11. The bottom wall 11 is overlapped on a bottom wall of the outer case 8 shown of FIG. 1.

The operation panel is separated from and connected to the main body 3 of the playback apparatus. A user of the CD changer 1 pushes a button on the operation panel for operation. The operation panel is used for setting a later-described holder 19 for holding the CD 2 to be inserted into the main body 3 through the slot 10. The operation panel is used for setting the holder 19 holding the CD 2 to be ejected from the main body 3 through the slot 10. The operation panel is used for setting the CD 2 to be read out among the CDs 2 held by a plurality of the holders 19.

The disk loader 4 is received in the main body 3, and as shown in FIG. 2, includes a roller arm 13 and a roller 14. The roller arm 13 is made of metal plate or the like, and formed in a strip shape. A longitudinal direction of the roller arm 13 is disposed along the width direction X of the main body 3. The roller arm 13 is disposed in the vicinity of the slot 10, and attached to a load frame 100 (shown in FIG. 2) which is attached to a moving chassis 16 which is supported movably up and down by the fixed chassis 9 of the main body 3.

The roller 14 is supported by the roller arm 13 rotatably about a shaft thereof. The shaft of the roller 14 is parallel to the width direction X of the CD changer 1. An outer wall of the roller 14 comes into contact with the CD 2 through the slot 10. A later-described motor 41 rotates the roller 14 around the shaft thereof through a plurality of gears 15. The disk loader 4 inserts the CD 2 into the slot 10 with the outer wall of the roller 14 contacting to the CD 2, and the motor 14 rotating the roller 14.

The playback part 5 is received in the main body 3. As shown in FIG. 3, the playback part 5 includes the moving chassis 16, a swinging chassis 17, a transporting mechanism 60, and a pickup playback part (not shown) . The moving chassis 16 is made of metal plate or the like and formed in a frame shape. The moving chassis 16 is supported by the side walls 12 of the fixed chassis 9 movably along a stacking direction K (shown as an arrow in FIG. 3) of the holders 19 of the disk receiver 6.

The swinging chassis 17 is made of metal plate or the like, and formed on a band plate shape. The swinging chassis 17 is supported by the moving chassis 16 rotatably about one end thereof. By rotating about the one end, the other end of the swinging chassis 17 can be inserted among a plurality of CDs 2, and removed from the CDs 2.

As shown in FIG. 3, the transporting mechanism 60 includes a first slide chassis 61, a second slide chassis, and a swinging arm 63. The first slide chassis 61 is made of metal plate, and integrally includes a horizontal part 64 and a vertical piece 65. The horizontal part 64 is formed in a plate shape, and overlapped with the plate-shaped bottom wall 11 of the fixed chassis 9.

The horizontal part 64 is supported by the bottom wall 11 slidably along a longitudinal direction of the swinging chassis 17 of which the other end is removed from the CDs 2. The horizontal part 64 is moved along the longitudinal direction of the swinging chassis 17 of which the other end is removed from the CDs 2 by a driving force of a later-described motor 20 of the separating mechanism 7. The vertical piece 65 is extended from an edge of the horizontal part upwardly, namely, toward the second slide chassis.

The second slide chassis is formed in a plate shape. The second slide chassis is interposed between the moving chassis 16 and the bottom wall 11, and overlapped with the moving chassis 16. The second slide chassis is supported by the moving chassis 16 slidably along the longitudinal direction of the swinging chassis 17 of which the other part is removed from the CDs 2.

The vertical piece 65 is locked on the second slide chassis. Therefore, the second slide chassis and the vertical piece 65 are moved along the longitudinal direction of the swinging chassis 17 of which the other part is removed from the CDs 2 by the driving force of the motor 20.

The swinging arm 63 is made of metal plate, and formed in a plate shape. As shown in FIG. 3, a planar shape of the swinging arm 63 is formed in substantially a V-shape. The swinging arm 63 is rotatably supported by the moving chassis 16 about the center thereof. One end of the swinging arm 63 is connected to the second slide chassis. The other end of the swinging arm 63 is rotatably connected to the swinging chassis 17. The swinging arm 63 swings the swinging chassis 17 about the one end of the swinging chassis 17 when the second slide chassis slides along the longitudinal direction.

The transporting mechanism 60 moves the first slide chassis 61 and the second slide chassis by the driving force of the motor 20, and rotates the swinging arm 63 to swing the swinging chassis 17 about the one end thereof. The transporting mechanism 60 swings the swinging chassis 17 about the one end thereof to move the optical pickup 66 to a position opposed to a data recording surface of the CD 2 held in the holder 19.

The pickup playback part is mounted on a vibration isolated CRG chassis supported on the swinging chassis 17 by a damper, a spring, and the like. The pickup playback part includes a turntable, a pickup part, and the like. The turntable includes a rotary table, a spindle motor, and a plurality of clamp nails. The rotary table is rotatably supported by the other end of the CRG chassis. The rotary table is formed in a disk shape on which the CD 2 is mounted.

The spindle motor is interposed between the other end of the CRG chassis and the rotary table. The spindle motor rotates the rotary table. The clamp nail is mounted on the rotary table and can be projected from the table. When being projected from the rotary table, the clamp nail is projected through a center hole of the CD 2 mounted on the rotary table, and catches the CD 2 with the rotary table. Thus, the clamp nail clamps the CD 2.

The pickup part includes an optical pickup 66 shown as a two-dot chain line in FIG. 3, and a pickup moving part. The optical pickup 66 is supported by the CRG chassis movably in a direction of approaching the turntable. The optical pickup 66 reads out data from the CD 2 supported by the turntable. Namely, the optical pickup 66 plays back the CD 2 held in the holder 19. When playing back, the CD 2 is escaped from the holder 19 in the thickness direction Z. The pickup moving part moves the optical pickup 66 close to and away from the turntable.

In the playback part 5, the other end of the swinging chassis 17 is inserted among the CDs 2, and clamp nail clamps the CD 2 , and the rotary table of the turntable rotates the CD 2. In the playback part 5, the optical pickup 66 reads out data from the CD 2 rotated by the turntable. Further, the playback part 5 is moved in a direction of the arrow K as later described. Thus, the playback part 5 is moved along the arrow K, clamps and plays back the CD 2 held in the holder 19.

The disk receiver 6 is received in the main body 3, and as shown in FIG. 3, includes a moving chassis 18 as a first wall and a plurality of the holders 19. The moving chassis 18 is made of metal plate, and formed in a plate shape. The moving chassis 18 is disposed parallel to the bottom wall 11 of the fixed chassis 9 with a gap. The playback part 5 is interposed between the moving chassis 18 and the bottom wall 11 of the fixed chassis 9. The moving chassis 18 is supported by the side walls 12 and the like movably along the arrow K.

The holders 19 are supported movably up and down by the fixed chassis 9 parallel to both the bottom wall 11 and the moving chassis 18. Later-described holder bodies of the holders 19 are overlapped with each other in a direction (arrow K) where the bottom wall 11 and the moving chassis 18 are overlapped with each other.

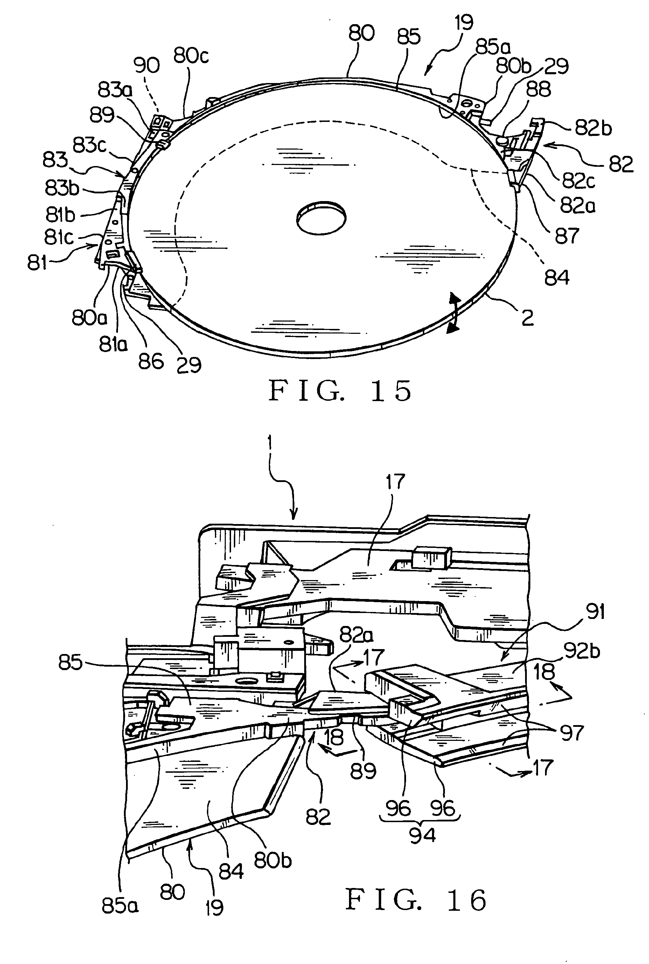

As shown in FIG. 15, the holder 19 includes a holder body 80, a first locking member 81, a second locking member 82, and a third locking member 83. The holder body 80 is made of synthetic resin, and formed in a plate shape. The holder body 80 includes integrally a retainer 84 and a flange 85.

The retainer 84 is formed in a plate shape. A planar shape of the retainer 84 is formed in a C-shape (half-ring shape). Therefore, a planar shape of the holder body 80 is formed in a C-shape. The CD 2 is disposed on a surface of the retainer 84. Therefore, the CD 2 is disposed on a surface of the holder body 80.

The flange 85 is extended vertically from an outer edge of an outer circumference of the retainer 84, and extended in an outer radial direction of the retainer 84. Therefore, the CD 2 disposed on the flange 85 is positioned on the retainer 84 by touching an inner edge 85a of the flange 85. For this purpose, the holder 19 includes the inner edge 85a touching an outer edge of the CD 2 held in the holder 19. In the holder body 80, an opening formed in C-shape of the retainer 84 is disposed in a manner to face the slot 10.

The first locking member 81 is made of synthetic resin, and formed in a band plate shape and an arm shape. The first locking member 81 is supported rotatably about a center part 81c in the longitudinal direction thereof by the flange 85 disposed at one end 80a of the holder body 80 on a left side of FIG. 15. Thus, the first locking member 81 is disposed rotatably at the one end 80a of the holder body 80.

In the first locking member 81, a locking nail 86 is disposed on an end 81a on a center front of FIG. 15 (a rear end of the holder body 80). The first locking member 81 is rotatable between a locking position where the locking nail 86 is projected from an inner edge of the flange 85 to the retainer 84 as shown in FIG. 15 and a not-shown unlocking position where the locking nail 86 is under the inner edge of the flange 85 and away from the retainer 84.

The first locking member 81 is rotatable between the locking and unlocking positions and is prevented from rotating over the locking and unlocking positions. The locking nail 86 positions an outer edge of the CD 2 at the locking position on the retainer 84, namely the holder body 80, and locks the outer edge of the CD 2. Thus, the first locking member 81 locks the outer edge of the CD 2 positioned on the retainer 84 of the holder body 80.

The second locking member 82 is made of synthetic resin, and formed in a band plate shape and in an arm shape. The second locking member 82 is supported rotatably and slidably about a center part 82c in the longitudinal direction thereof by the flange 85 disposed at the other end 80b of the holder body 80 on a right side of FIG. 15. Thus, the second locking member 82 is disposed rotatably and slidably on the other end 80b of the holder body 80.

In the second locking member 82, a locking nail 87 is disposed on an end 82a on a center front of FIG. 15 (an end of the holder body 80) . The second locking member 82 is rotatable and slidable between a locking position where the locking nail 87 is projected from an inner edge of the flange 85 to the retainer 84 as shown in FIG. 15 and a not-shown unlocking position where the locking nail 87 is under the inner edge of the flange 85 and away from the retainer 84.

The second locking member 82 is rotatable between the locking and unlocking positions and is prevented from rotating over the locking and unlocking positions. The locking nail 87 positions an outer edge of the CD 2 at the locking position on the retainer 84, namely the holder body 80, and locks the outer edge of the CD 2. Thus, the second locking member 82 locks the outer edge of the CD 2 positioned on the retainer 84 of the holder body 80.

A twisted coil spring 88 attached to the flange 85 of the holder body 80 urges the second locking member 82 in a direction where the locking nail 87 is projected from the inner edge of the flange 85 to the retainer 84, namely the locking position. Namely, the second locking member 82 is urged in a direction where the locking nail 87 is locked on an outer edge of the CD 2 on the holder body 80 (toward an inside of the retainer 84).

The third locking member 83 is made of synthetic resin, and formed in a band plate shape and in an arm shape. The third locking member 83 is supported rotatably about a center part 83c in the longitudinal direction thereof by the flange 85 disposed at the center part 80c between the one end 80a and the other end 80b of the holder body 80. Thus, the second locking member 82 is disposed rotatably between the one end 80a and the other end 80b of the holder body 80.

In the third locking member 83, a locking nail 89 is disposed on an one end 83a on a center back of FIG. 15 (a center of the holder body 80). The third locking member 83 is rotatable between a locking position where the locking nail 89 is projected from an inner edge of the flange 85 to the retainer 84 as shown in FIG. 15 and a not-shown unlocking position where the locking nail 89 is under the inner edge of the flange 85 and away from the retainer 84.

The third locking member 83 is rotatable between the locking and unlocking positions and is prevented from rotating over the locking and unlocking positions. The locking nail 89 positions an outer edge of the CD 2 at the locking position on the retainer 84, namely the holder body 80, and locks the outer edge of the CD 2. Thus, the third locking member 83 locks the outer edge of the CD 2 positioned on the retainer 84 of the holder body 80.

Further, the other end 83b of the third locking member 83 is disposed at a position nearer the retainer 84 than the other end 81b of the first locking member 81, namely an inside of the holder body 80, and contacts the other end 81b of the first locking member 81. A twisted coil spring 90 attached to the flange 85 of the holder body 80 urges the third locking member 83 in a direction where the locking nail 89 is projected from the inner edge of the flange 85 to the retainer 84, namely the locking position. Namely, the third locking member 83 is urged in a direction where the locking nail 89 is locked on an outer edge of the CD 2 on the holder body 80 (toward an inside of the retainer 84).

Because the other end 83b of the third locking member 83 is disposed at a position nearer the retainer 84 than the other end 81b of the first locking member 81, namely an inside of the holder body 80, and contacts the other end 81b of the first locking member 81, the twisted coil spring 90 urges the first locking member 81 in a direction where the locking nail 86 projects from the inside of the flange 85 to the retainer 84, namely, toward the locking position. Therefore, the first locking member 81 is urged in a direction where the locking nail 86 is locked at an outer edge of the CD 2 on the holder body 80 (toward an inside of the retainer 84).

Further, the first locking member 81 and the third locking member 83 are urged by the same twisted coil spring 90. Therefore, the third locking member 83 and any one of the first locking member 81 and the second locking member 82 are urged by the same twisted coil spring 90.

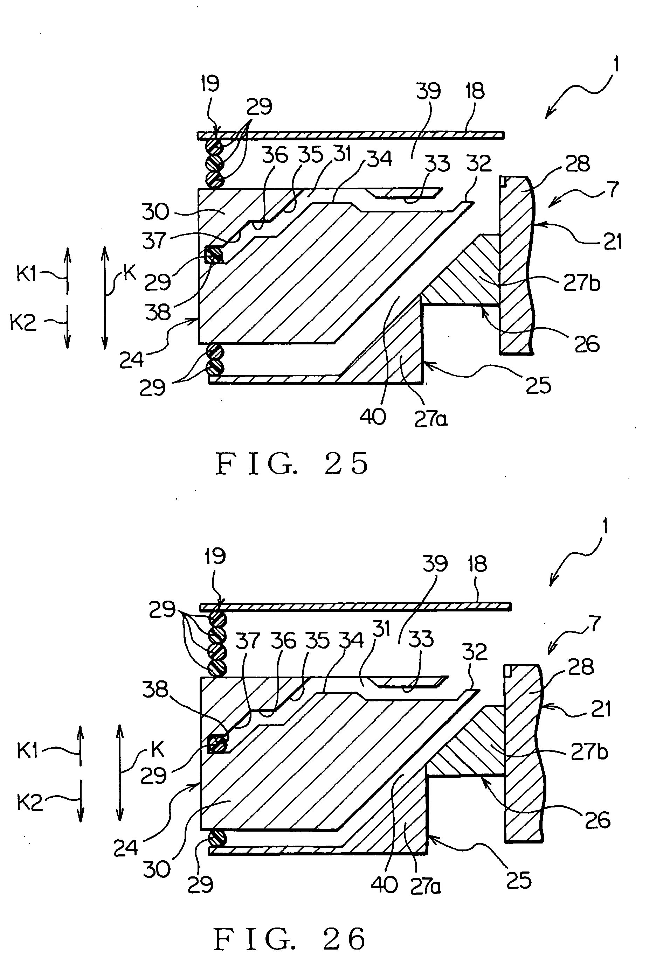

In the holder 19, the CD 2 is inserted into the main body 3 via the slot 10, then positioned on the retainer 84 via the opening of the holder body 80, and locked by the locking nails 86, 87, 89 at the outer edge of the CD 2. A plurality of the holders 19 are overlapped with each other in a manner that surfaces of the CDs 2 held in the holders 19 are parallel to each other. The holder 19 is supported by such as the fixed chassis 9 movably up and down along the arrow K. An outer projection 29 is disposed on each holder body 80 of the holder 19 (shown in FIGS. 15 and 25). The disk receiver 6 receives stacked holders 19 which can hold the CDs 2.

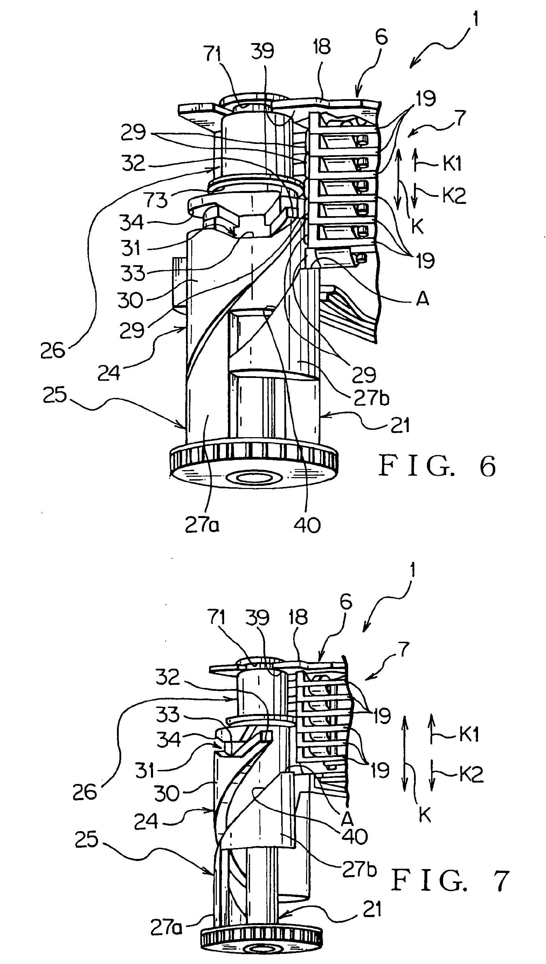

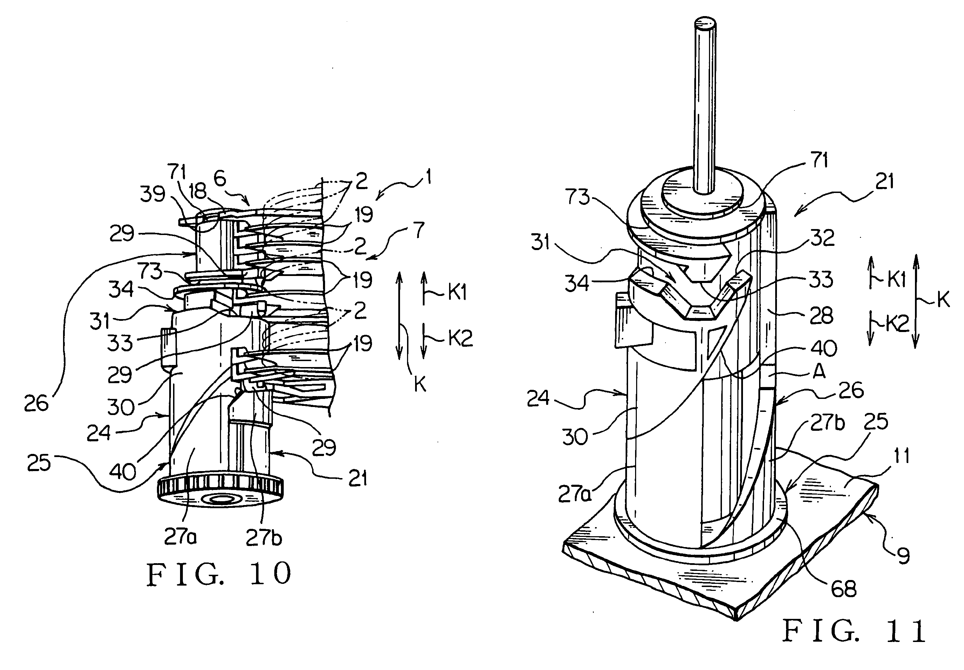

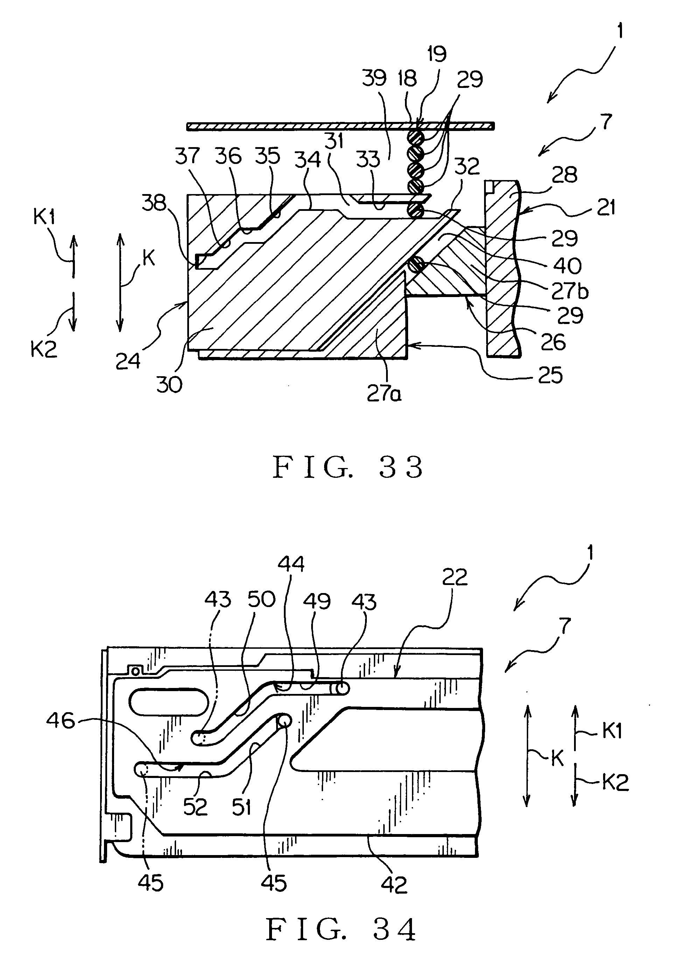

The separating mechanism 7 is received in the main body 3, and includes a motor 20 (shown in FIG. 3), a spaced groove expansion mechanism 21 (shown in FIGS. 6 and 10), and a cooperative moving mechanism 22 (shown in FIGS. 34-41) . As shown in FIG. 3, the motor 20 is fixed to the fixed chassis 9.

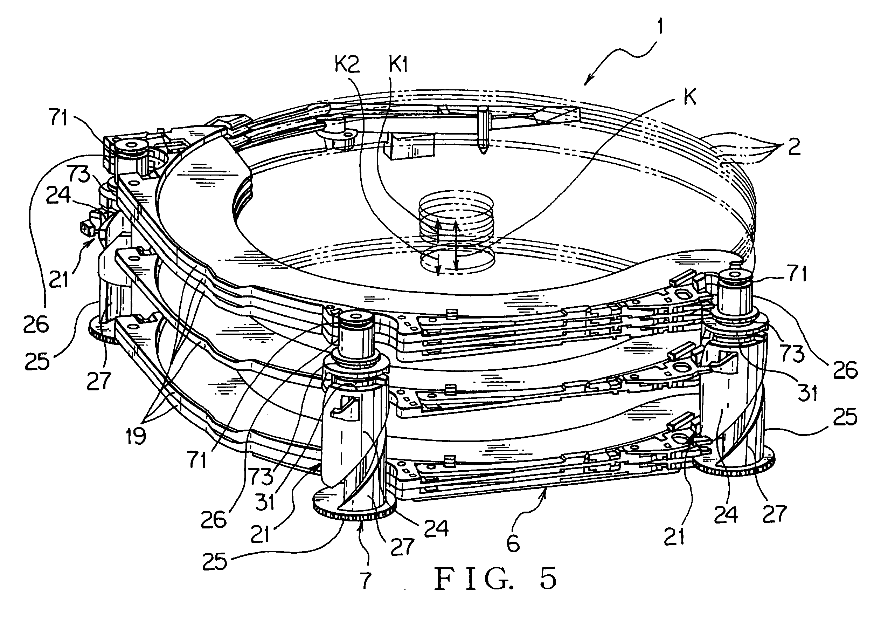

As shown in FIG. 5, three of the spaced groove expansion mechanisms 21 are mounted on the three corners of the main body 3. As shown in FIGS. 6-14, the groove expansion mechanism 21 is formed in a column shape, and includes a rotating member 25, a moving member 26, and a cam member 24.

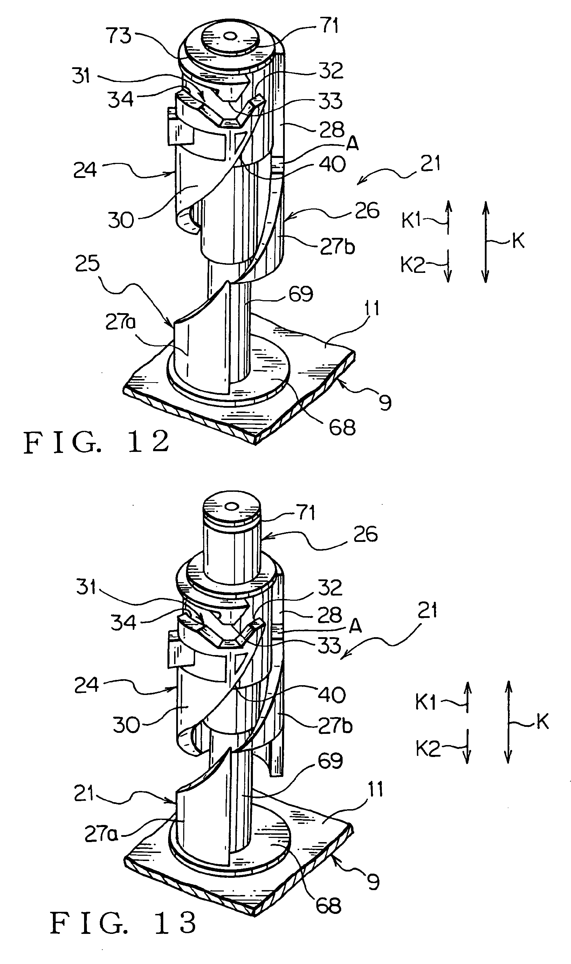

As shown in FIGS. 12-14, the rotating member 25 includes a disk part 68 and a column part 69 coaxially integrated with each other. The disk part 68 is formed in a disk shape, and supported by the bottom wall 11 of the fixed chassis 9 rotatably about a shaft thereof. The column part 69 is formed in a column shape, and extended vertically from the disk part 68.

The shaft of the rotating member 25 is disposed parallel to the arrow K. In the rotating member 25, teeth disposed on an outer edge of the disk part 68 is engaged with a plurality of gears 67 disposed rotatably on the bottom wall 11. A cam 67a on the cam 67b in FIG. 3 connected to a pinion of the motor 20 via the gears 67 rotates the rotating member 25 about the shaft thereof by the driving force of the motor 20. This means that the motor 20 moves the rotating member 25 by the driving force of the motor 20. The rotating member 25 positions the moving member 26 and the cam member 24 coaxially, and rotates the moving member 26 and the cam member 24.

As shown in FIGS. 11-14, the moving member 26 is formed in a circular pipe shape, and attached to the outer periphery of the rotating member 25 coaxially. The moving member 26 and the rotating member 25 are attached to each other with a key composed of a projection 70 mounted on the rotating member 25 and a key groove mounted on the moving member 26. The moving member 26 is attached to the rotating member 25 movably along the arrow K. The moving member 26 is movable along the arrow K independently from the cam member 24. Further, a locking groove 71 is disposed on an edge (top end) of the moving member 26 away from the bottom wall 11. The moving member 26 and the rotating member 25 are integrally rotated about the shaft thereof.

Further, as shown in FIGS. 6, 19-33, the moving member 26 is attached to the moving chassis 18 as a first wall, and a second wall 27b is mounted on the moving member 26. The moving chassis 18 and the second wall 27b are disposed on both edges respectively of the moving member 26 in the shaft direction, having a specific interval along the shaft which is parallel to the arrow K. The moving chassis 18 and the second wall 27b are projected outward in a radial direction from both edges of the moving member 26.

The moving member 26 is attached to the moving chassis 18 by the locking groove 71 that is mounted on the fixed chassis 9 away from the bottom wall 11. This is described in this present invention that the moving chassis 18 as the first wall is mounted on an upper end of the moving member 26. Thus, the moving member 26 and the moving chassis 18 are integrally moved along the arrow K. Further, the moving chassis 18 allows the moving member 26 to rotate about the shaft thereof. The moving chassis 18 is formed in a plate shape extended in a direction perpendicular to the arrow K.

The second walls 27a, 27b are extended from the rotating member 25 to the moving member 26. As shown in FIGS. 11-14, in the rotating member 25, the second wall 27a is extended vertically from an outer edge of the disk part 68, and a cross-section of the second wall 27a is formed in an arc shape about the shaft of the rotating member 25. Thus, the second wall 27a is arranged in an outer circumference of the disk part 68.

In the moving member 26, as shown in FIGS. 11-14 , the second wall 27b is disposed on an edge of the fixed chassis 9 next to the bottom wall 11 (namely, a bottom end of the moving member 26) . The second wall 27b is arranged in an outer circumference of the moving member 26, and coaxially with the moving member 26. The second walls 27a, 27b are arranged in a same surface from the rotating member 25 to the moving member 26. As the second walls 27a, 27b are extended from the moving member 26 to the rotating member 25, the second walls 27a, 27b are away from the moving chassis 18, and extended in both the arrow K and the direction perpendicular to the arrow K.

In an area between the moving chassis 18 and the second walls 27a, 27b, in an area where a later-described wedge part 30 of the cam member 24 is not positioned in between the moving chassis 18 and the second walls 27a, 27b along the arrow K, an interval between the moving chassis 18 and the second walls 27a, 27b is equal to or substantially equal to the product of the number of the holders 19 and a groove width of the projection 29 in the direction of the arrow K.

The rotating member 25 and the moving member 26 support the holder 19 by positioning the projection 29 between the moving chassis 18 and the second walls 27a, 27b. Further, by rotating about the shaft, the rotating member 25 and the moving member 26 allow the projection 29 to move in a direction perpendicular to the arrow K in a manner to move away from a later-described connecting wall 28 between the moving chassis 18 and the second walls 27a, 27b. Therefore, the cam member 24, the rotating member 25, and the moving member 26 are moved by the driving force of the motor 20 in a direction where the projection 29 is inserted into later-described spaced grooves 39, 40. Further, the cam member 24, the rotating member 25, and the moving member 26 position the projections 29 of all the holders 19 between the moving chassis 18 and the second walls 27a, 27b at a later-described receiving position.

As shown in FIGS. 11-14, the cam member 24 is formed in a circular pipe shape, attached to an outer circumference of the moving member 26, and arranged coaxially with the rotating member 25, the moving member 26 and the like. The cam member 24 and the moving member 26 are attached to each other with a key composed of projections 72 mounted on the cam member 24 and a projection mounted on the moving member 26. The cam member 24 is attached to the moving member 26 movably along the arrow K. The cam member 24 is rotated integrally with the rotating member 25 and the moving member 26 about the shaft.

Further, a locking groove 73 is disposed on the cam member 24 away from the bottom wall 11. The moving chassis 16 of the playback part 5 is locked and attached to the locking groove 73 of the cam member 24. Therefore, the cam member 24 is moved integrally with the moving chassis 16, namely the optical pickup 66, along the arrow K. Thus, the cam member 24 is movable along the arrow K. Further, the moving chassis 16 allows the cam member 24 and the like to rotate about the shaft.

Further, the cam member 24 includes the wedge part 30, a guiding groove 31, and the connecting wall 28. The wedge part 30 is interposed between the moving chassis 18 and the second wall 27, and arranged with a gap to the connecting wall 28. Thus, the wedge part 30 of the cam member 24 is moved between the moving chassis 18 and the second walls 27 along the arrow K. The wedge part 30 is formed in a manner that as moving toward the moving member 26, the groove width along the arrow K is decreased.

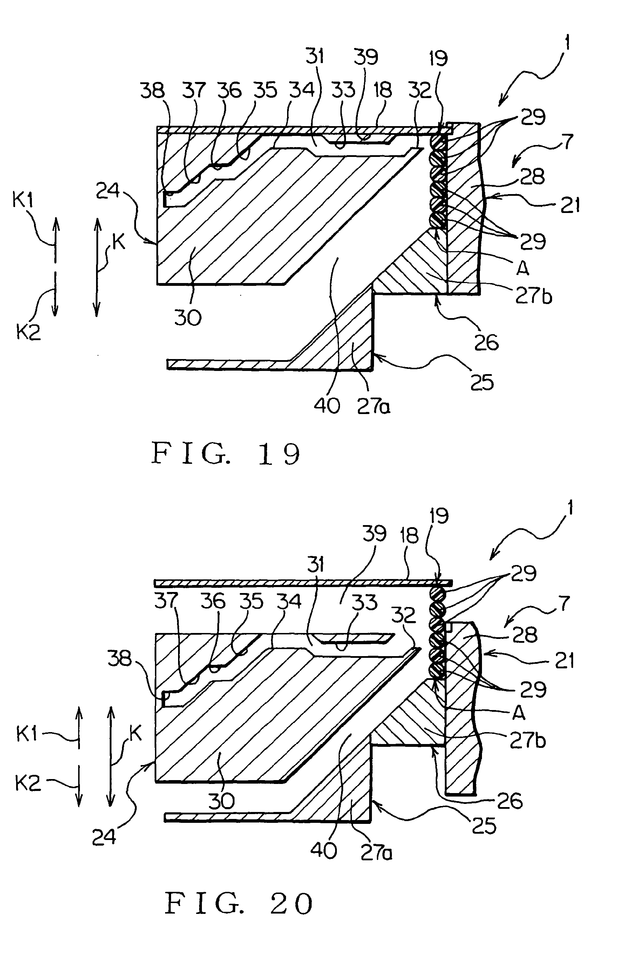

The guiding groove 31 is mounted on the wedge part 30. The guiding groove 31 is formed on an outer circumference of the wedge part 30 of the cam member 24. Namely, the guiding groove 31 is a concave on the outer circumference of the wedge part 30. The groove width of the guiding groove 31 is substantially equal to a width of the projection 29 along the arrow K. As shown in FIGS. 19-33, the guiding groove 31 includes an opening part 32 facing the connecting wall 28, a loading part 33, a pickup insertion part 34, a first connecting part 35, a clamp part 36, a second connecting part 37, a playback part 38. The loading part 33, the pickup insertion part 34, the clamp part 36, the playback part 38 are extended in a direction perpendicular to the arrow K. The first connecting part 35 and the second connecting part 37 are extended in a direction perpendicular to both the arrow K and the direction perpendicular to the arrow K.

The loading part 33 is continued to the opening part 32, and disposed on the opening part 32 away from the connecting wall 28. The pickup part 34 is continued to the loading part 33, and disposed on the loading part 33 away from the connecting wall 28. The pickup insertion part 34 is positioned farther than the loading part 33 from the second walls 27 of the rotating member 25.

The first connecting part 35 is continued to the pickup insertion part 34, and disposed on the pickup insertion part 34 away from the connecting wall 28. As the first connecting part 35 is removed from the pickup insertion part 34, the first connecting part 35 is extended nearer the second walls 27 of the rotating member 25. The clamp part 36 is connected to the first connecting part 35, and disposed on the first connecting part 35 away from the connecting wall 28. The second connecting part 37 is connected to the clamp part 36, and disposed on the clamp part 36 away from the connecting wall 28. As the second connecting part 37 is removed from the clamp part 36, the second connecting part 37 is extended nearer the second walls 27 of the rotating member 25. The playback part 38 is connected to the second connecting part 37, and disposed on the second connecting part 37 away from the connecting wall 28.

The guiding groove 31 allows the projection 29 to be inserted through the opening part 32. Namely, the projection 29, namely, the holder 19 is slidable in the guiding groove 31. Further, the guiding groove 31 allows the projection 29 to move sequentially into the loading part 33, the pickup insertion part 34, the first connecting part 35, the clamp part 36, the second connecting part 37, and the playback part 38.

The holder 19 having the projection 29 positioned in the loading part 33 faces the slot 10 along the arrow Y. The holder 19 having the projection 29 positioned in the loading part 33 can hold the CD 2 inserted through the slot 10, and eject the CD 2 through the slot 10 out of the main body 3.

The holder 19 having the projection 29 positioned in the pickup insertion part 34 is removed from the other holders 19 disposed on the bottom of FIG. 2 and allows the other end of the swinging chassis 17, namely the pickup playback part to be inserted between the holders 19 disposed on the bottom of FIG. 2. The holder 19 having the projection 29 positioned in the clamp part 36 allows the turntable of the playback part 5 to clamp the CD 2 held by the holder 19. The holder 19 having the projection 29 positioned in the playback part 38 is removed from the CD 2 clamped by the turntable, and does not interfere with the CD 2 rotated by the turntable. Namely, the holder 19 allows the CD 2 to be rotated.

The connecting wall 28 is extended in a straight line along the arrow K. The connecting wall 28 faces the opening part 32 of the guiding groove 31 disposed on the wedge part 30 with a gap in a direction perpendicular to the arrow K. The connecting wall 28 is formed by connecting the moving chassis 18 and the second walls 27 to each other.

Thus, the cam member 24 includes the guiding groove 31 which is slidable for the projection 29 of the holder 19, which holds one CD 2.

As shown in FIG. 11, the rotating member 25, the moving member 26, and the cam member 24 are arranged coaxially. As shown in FIGS. 11-13, the moving member 26 and the cam member 24 are movable along the arrow K independently from each other.

Further, a first spaced groove 39 is a groove between the moving chassis 18 and the wedge part 30 of the cam member 24. The first spaced groove 39 is composed of the moving chassis 18, and a top plate of the wedge part 30 away from the bottom wall 11. The first spaced groove 39 is engaged with the other holders 19 upper (the arrow K1 side) than the holder holding the one CD 2 engaging with the guiding groove 31.

Further, a second spaced groove 40 is a groove between the second walls 27 and the wedge part 30 of the cam member 24. The second spaced groove 40 is composed of the second walls 27 and a lower wall of the wedge part 30 near the bottom wall 11. The second spaced groove 40 is engaged with the other holders lower (the arrow K2 side) than the holder holding the one CD 2 engaging with the guiding groove 31.

The projection 29 of the holders 19 other than the holder holding the one CD 2 engaging with the guiding groove 31 can be inserted into between the first spaced groove 39 and the second spaced groove 40. Spaced grooves in this description are the first spaced groove 39 and the second spaced groove 40. The first spaced groove 39 and the second spaced groove 40, namely, the spaced grooves are made by slidably engaging the holders other than the holder holding the one CD 2, and moving the cam member 24 and the moving member 26 relative to each other.

An interval between the first spaced groove 39 and the second spaced groove 40 are varied because the cam member 24 and the moving member are relatively moved along the arrow K. When the cam member 24 is slid along the arrow K, the gap of the first spaced groove 39 is increased and the gap of the second spaced groove 40 is decreased, or vice versa.

Further, the sum of the gaps of the first spaced groove 39 and the second spaced groove 40 is equal to or substantially equal to the product of the number of the number of the holders 19 minus one and a width of the projection 29 in the direction of the arrow K. The intervals of the first spaced groove 39 and the second spaced groove 40 are varied by the cam member 24 and the moving member 26 relatively moving along the arrow K. Namely, moving the cam member 24 and the moving member 26 relative to each other varies the gaps of the first spaced groove 39 and the second spaced groove 40 along the direction K.

According to the above, among the projections 29 of all the holders 19 between the moving chassis 18 and the second walls 27, one projection 29 is inserted into the guiding groove 31 by transmitting the driving force of the motor 20 through a plurality of the gears 67 and integrally rotating the rotating member 25, the moving member 26 and the cam member 24. As shown in FIG. 6, the projections 29 of the holders 19 nearer the arrow K1 side than the projection 29 inserted into the guiding groove 31 are inserted into the first spaced groove 39, and the projections 29 of the holders nearer the arrow K2 than the projection 29 inserted into the guiding groove 31 are inserted into the second spaced groove 40. Incidentally, the arrow K1 is one side of the arrow K and the arrow K2 is the other side of the arrow K.

In this description, the state that the projections 29 of all the holders 19 are not inserted into the guiding groove 31, but moved toward the connecting wall 28 and interposed between the moving chassis 18 and the second walls 27 is defined as that the holders 19 are positioned in a receiving position. In the receiving position, because the wedge part 30 of the cam member 24 is spaced with the connecting wall 28, the first spaced groove 39 and the second spaced groove 40 are integrated with each other. Therefore, in the receiving position, the holders 19 are close to each other.

In this description, a state that the projection 29 is inserted into the playback part 38 of the guiding groove 31 and insides of the first spaced groove 39 and the second spaced groove 40 is defined as that the holder 19 is in a playback position. In the playback position, owing to the wedge part 30 of the cam member 24, the holder 19 of which projection 29 is inserted into the guiding groove 31 is removed from the other holders in the receiving position. In the playback position, the holder holding the CD 2 to be played back is removed from the other holders 19, and the optical pickup 66 can be inserted into between the holder holding the CD 2 to be played back and the other holders 19.

A state that the projection 29 is interposed between the second walls 27 of the moving member 26 and the moving chassis 18, and inserted into the loading part 33, the first spaced groove 39, and the second spaced groove 40 is defined as that the holder 19 is in a loading position.

Further, in the playback position, the projections 29 of the holders 19 at the arrow K1 side from the holder 19 holding the CD 2 to be played back are inserted into the first spaced groove 39. The first spaced groove 39 removes the holders at the arrow K1 side from the holder 19 holding the CD 2 to be played back.

Further, in the playback and loading positions, the projections 29 of the holders 19 at the arrow K2 side from the holder 19 holding the CD 2 to be played back are inserted into the second spaced groove 40. The second spaced groove 40 removes the holders at the arrow K2 side from the holder 19 holding the CD 2 to be played back.

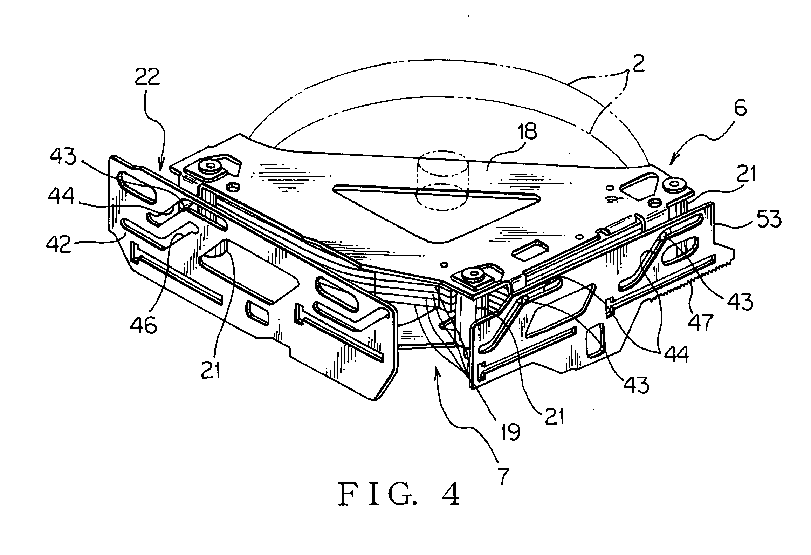

As shown in FIG. 34, the cooperative moving mechanism 22 includes the motor 41 (shown in FIG. 3), a driving chassis 42 (shown in FIGS. 3 and 4), a second driving chassis 53 (shown in FIGS. 3 and 4), first projections 43, first holes 44, a second projection 45, and a second hole 46. In FIG. 3, two driving chassis 42 and two second driving chassis 53 are shown. However, actually, one driving chassis 42 and one second driving chassis 53 are mounted.

In the cooperative moving mechanism 22, when the holders 19 in the disk receiver 6 are moved from the receiving position to the playback position, the moving member 26 is moved along the arrow K relative to the rotating member 25 so as to locate the moving member 26 farthest away from the rotating member 25. Then, the cooperative moving mechanism 22 positions the cam member 24 to the position where the projection 29 of the holders 19 holding the CD 2 to be positioned in a playback position is allowed to be inserted into the guiding groove 31.

When the holders 19 in the disk receiver 6 are moved between the playback position and the loading position, namely, when the CD 2 is inserted into or removed from the main body, the cooperative moving mechanism 22 moves the cam member 24 relative to the moving member 26 along the arrow K to position the cam member 24 at the closest position to the rotating member 25. Then, the cooperative moving mechanism 22 positions the moving member 26 at a position where the projection 29 of the holders 19 holding the CD 2 which is positioned at the loading position can be inserted into the guiding groove 31. Owing to the driving force of the motor 41, the cooperative moving mechanism 22 moves the cam member 24, namely the moving chassis 16 of the playback part 5, and the moving member 26, namely the moving chassis 18 of the disk receiver 6 together along the arrow K.

The motor 41 is attached to such as the bottom wall 11 of the fixed chassis 9. The driving chassis 42 is made of such as metal plate, and formed in a plate shape. In a plan view, the driving chassis 42 is in a rectangular shape. The side walls 12 of the fixed chassis 9 of the main body of the playback apparatus 3 support the driving chassis 42 movably in a direction perpendicular to the arrow K.

The second driving chassis 53 is made of metal plate, and formed in a plate shape. In a plan view, the second driving chassis 53 is in a rectangular shape. The side walls 12 of the fixed chassis 9 of the main body 3 support the second driving chassis 53 movably in a direction perpendicular to the arrow K. Gears 48 rotated by the driving force of the motor 41 and a rack 47 engaged with the gears 48 are formed in the second driving chassis 53.

The first projections 43 are projected from the moving chassis 18 of the disk receiver 6 toward the driving chassis 42 and the second driving chassis 53. The first holes 44 are mounted on the driving chassis 42 and the second driving chassis 53. Of course, the first holes 44 penetrate the driving chassis 42 and the second driving chassis 53. As shown in FIG. 4, the first projections 43 are inserted into the first holes 44.

As shown in FIGS. 34-41, each first hole 44 includes a first parallel part 49 and a first slope part 50. The first parallel part 49 is extended straightly in a direction perpendicular to the arrow K. The first slope part 50 is continued to an end of the first parallel part 49 and extended straightly in a direction perpendicular to both the arrow K and the direction perpendicular to the arrow K. The first slope part 50 is inclined in a direction from the first parallel part 49 to the bottom wall 11 of the fixed chassis 9.

The second projection 45 projects from the moving chassis 16 of the playback part 5 to the driving chassis 42. The second hole 46 is mounted on the driving chassis 42. Of course, the second hole 46 penetrates the driving chassis 42.

The second hole 46 includes a second slope part 51 and a second parallel part 52. The second slope part 51 is extended straightly in a direction perpendicular to both the arrow K and the direction perpendicular to the arrow K. The second slope part 51 is inclined in a direction from the first parallel part 49 to the bottom wall 11 of the fixed chassis 9. The second slope part 51 is parallel to the first slope part 50. The second parallel part 52 is continued to an end of the second slope part 51 and extended straightly in a direction perpendicular to the arrow K.

When the first projections 43 are positioned in the first slope parts 50, the second projection 45 is positioned in the second parallel part 52. When the first projections 43 are positioned in the first parallel parts 49, the second projection 45 is positioned in the second slope part 51.

The cooperative moving mechanism 22 is moved on the second driving chassis 53 in a direction perpendicular to the arrow K by the driving force of the motor 41. Together with the movement of the second driving chassis 53, the driving chassis 42 connected to the second driving chassis 53 is moved in a direction perpendicular to the arrow K by a link arm 101 shown in FIG. 3.

For this purpose, the cooperative moving mechanism 22, namely the separating mechanism 7 includes the motor 41 as a single driving source for moving the cam member 24 and the moving member 26 along the arrow K.

The cooperative moving mechanism 22 positions the driving chassis 42 at a position where the second projection 45 is moved in the second parallel part 52, and the first projections 43 is moved in the first slope part 50 by the driving force of the motor 41, when positioning the holders 19 at the loading position, namely, when inserting or removing the CD 2 from the main body of the playback apparatus 3. The cooperative moving mechanism 22 positions the driving chassis 42 at a position where the second projection 45 is moved in the second slope part 51, and the first projections 43 is moved in the first parallel part 49, when moving the holders 19 between the playback and receiving positions.

When the cooperative moving mechanism 22 positions the second projection 45 in the second parallel part 52, the cam member 24 is at the closest position to the second walls 27 of the rotating member 25. The holder 19, of which projection 29 is positioned inside the loading part 33 of the guiding groove 31 of the cam member 24 at the closest position to the second walls 27 of the rotating member 25, is positioned to a position where the holder 19 can hold the CD 2 to be inserted or removed through the slot 10.

As shown in FIG. 42, the guiding mechanism 91 includes an arm main body 92, an abutting part 93, a guiding part 94, and a coil spring 95.

The arm main body 92 is formed in a rod shape and the center thereof along a longitudinal direction is supported movably along a direction of an arrow of C, shown in FIG. 42, at the load frame 100 fixed to the moving chassis 16. The arm main body 92 is rotated with a lever attached to the load frame 100.

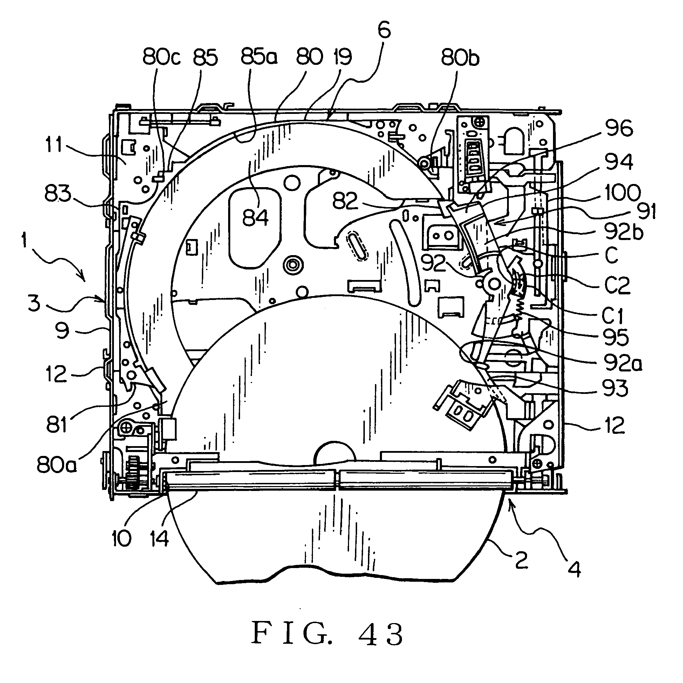

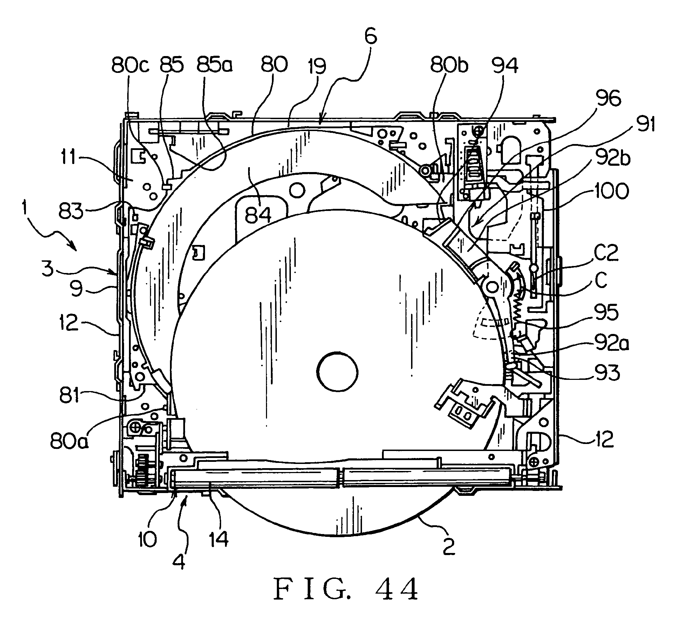

The arm main body 92 is rotatable between a position (shown in FIGS. 42 and 43) where in a state the swinging chassis 17 is saved from the CDs 2, namely the holders 19, one end 92a near the slot 10 can contact the outer edge of the CD 2 inserted from the slot 10, and a position (shown in FIG. 44) where the other end 92b of the arm main body 92 away from the slot 10 projects inside the main body 3, namely the CDs 2, from the inner edge 85a of the flange 85 of the holders 19. The arm main body 92 is not allowed to rotate over the positions shown in FIGS. 42 and 43 and the position shown in FIG. 44 with a regulation of a cam on a lever attached to the load frame 100.

The abutting part 93 is disposed on the end 92a of the arm main body 92. The abutting part 93 abuts on the CD 2 inserted into the main body 3 through the slot 10.

The guiding part 94 is disposed on the other end 92b of the arm main body 92. As shown in FIGS. 16-18, the guiding part 94 has the pair of guiding projections 96 and a pair of tapered faces 97. The guiding projections 96 are connected to the other end 92b of the arm main body 92 and disposed opposed to each other in a direction perpendicular to a surface of the CD 2 inserted in the main body 3. The pair of guiding projections 96 have a curve along the inserting and ejecting direction of the CD 2 through the slot 10.

The pair of tapered faces 97 are disposed at ends of the guiding projections 96 in the side of the holders 19, or CDs 2, when the swinging chassis 17 is saved from the plurality of the holders 19 or CDs 2. The tapered faces 97 have slopes in the direction of the holder 19, or the center of the CD 2, to expand a distance between the pair of the guiding projections 96 when the swinging chassis 17 is saved from the plurality of the holders 19 or CDs 2.

When the CD 2 abuts to the abutting part 93 and the arm main body 92 rotates to a direction of an arrow (shown in FIG. 43) of C1, to which the abutting part 93 moves outside the main body 3, the pair of the guiding projections 96 project inside the main body 3 from the inner edge 85a of the flange 85 of the holder 19 as shown in FIG. 44. The CD 2 inserted into the main body 3 is positioned between the pair of the guiding projections 96, which have a space with respect to the outer edge of the CD 2 in the direction perpendicular to the surface of the CD 2 to be inserted.

Further, the pair of the guiding projections 96 receive the second locking member 82 disposed at the other end 80b of the holder body 80. The other end 80b is the end of the holder 19 and the second locking member 82 is the locking member in the specification. The guiding projections 96 are a positioning means and positions the guiding part 94 and holder 19 so as that the guiding part 94 guides the CD 2 to the holder 19.

One end of the coil spring 95 is attached to the load frame 100, and the other end of the coil spring 95 is attached to the arm main body 92. The coil spring 95 urges the arm main body 92 in a direction where the guiding part 94, or the pair of the guiding projections 96, approaches the main body 3, or the outer edge of the CDs 2. The coil spring 95 urges the arm main body 92 along an arrow C2 (shown in FIG. 42) in a direction where the guiding part 94, or the pair of the guiding projections 96, approaches outside the main body 3 from the inner edge 85a.

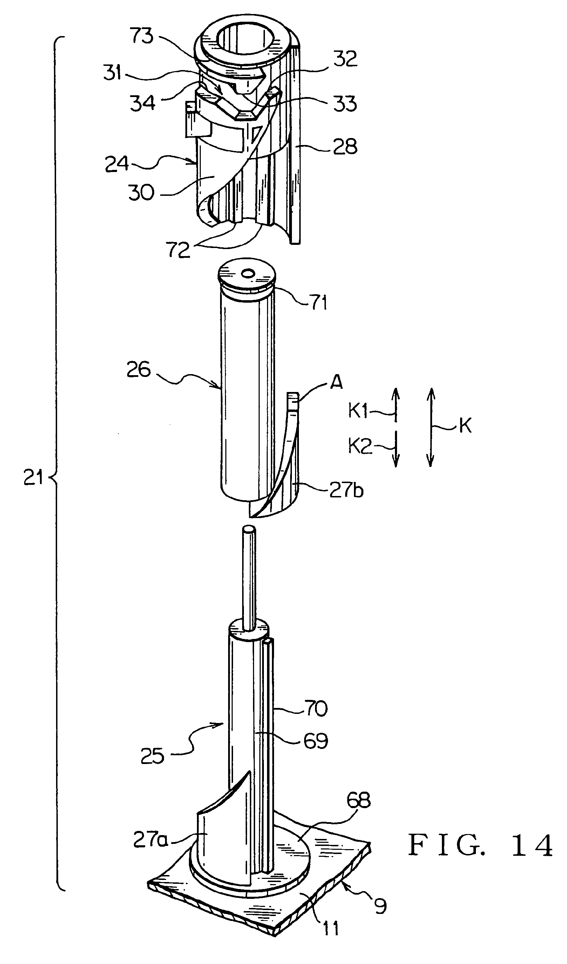

When the CD changer 1 reads the data out of the CD 2 selected from the CDs 2 received in the main body 3 by such as an operation part, all the projections 29 of the holders 19 are positioned on a horizontal part A , shown in FIGS. 14, 19 and 20, of the second wall 27b by the driving force of the motor 20 as shown in FIG. 19. Further, the other end of the swinging chassis 17 of the playback part 5, namely the turntable and the pickup playback part, is saved from the CD 2. As shown in FIG. 34, the driving chassis 42 is positioned on a position where the first projections 43 are positioned in the first parallel part 49 of the first holes 44 by the driving force of the motor 41. Then, as shown in FIG. 19, the moving chassis 18 is moved the farthest away from the second wall 27a of the rotating member 25.

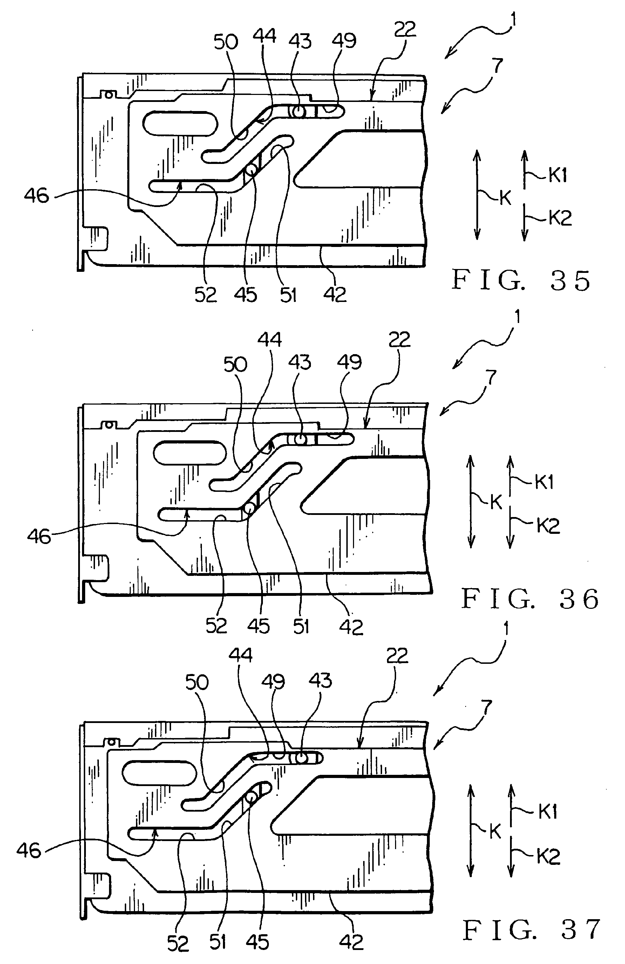

Then, owing to the driving force of the motor 41, as shown in FIG. 35, the second projection 45 is moved in the second slope part 51 so that the driving chassis 42 is positioned on a position where the projection 29 of the holder 19 having the CD 2 selected for reading out the data faces the guiding groove 31 in a direction perpendicular to the arrow K. Then, as shown in FIGS. 7 and 20, the opening part 32 of the guiding groove 31 of the cam member 24 faces the projection 29 of the holder 19 holding the CD 2 selected for reading out the data in a direction perpendicular to the arrow K. Incidentally, in FIGS. 7 and 20, the projection 29 of the fourth holder 19 from the top faces the guiding groove 31 formed on the cam member 24.

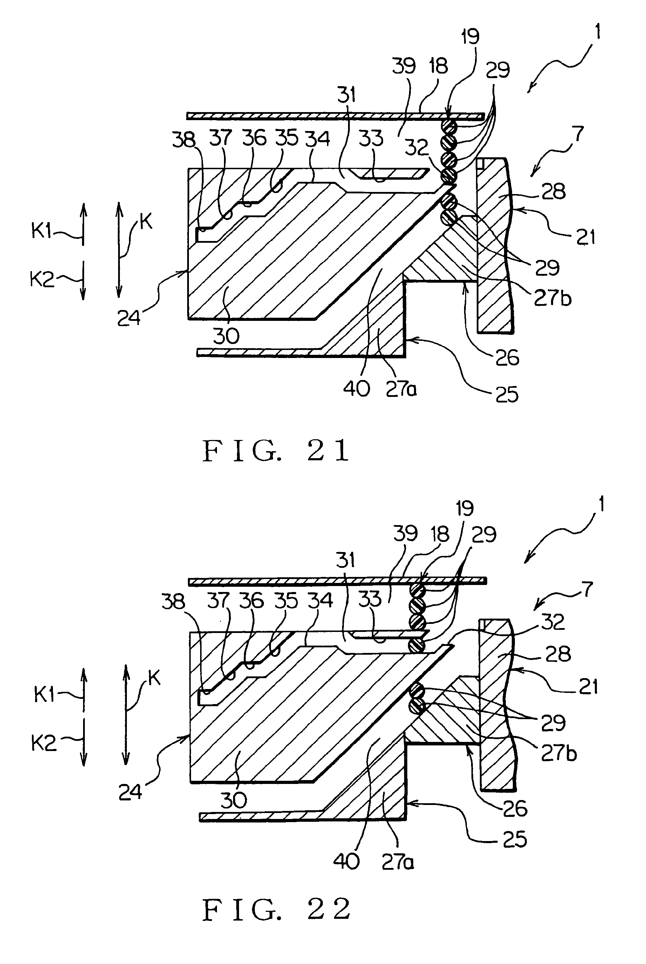

Then, owing to the driving force of the motor 20, the rotating member 25, the moving member 26, and the cam member 24 are integrally rotated. Then, the projections 29 of all the holders 19 are gradually removed from the connecting wall 28. Then, as shown in FIG. 21, the projection 29 of the holder 19 holding the CD 2 selected for reading out the data is inserted into the opening part 32 of the guiding groove 31. Further, the projections 29 of the holders 19 holding the other CDs 2 contact the wedge part 30 of the cam member 24, and moved in the first spaced groove 39 and the second spaced groove 40 owing to the wedge part 30 and the like.

Further, as shown in FIG. 22, when the rotating member 25, the moving member 26, and the cam member 24 are rotated owing to the driving force of the motor 20, the projection of the holder 19 holding the CD 2 selected for reading out the data is positioned in the loading part 33.

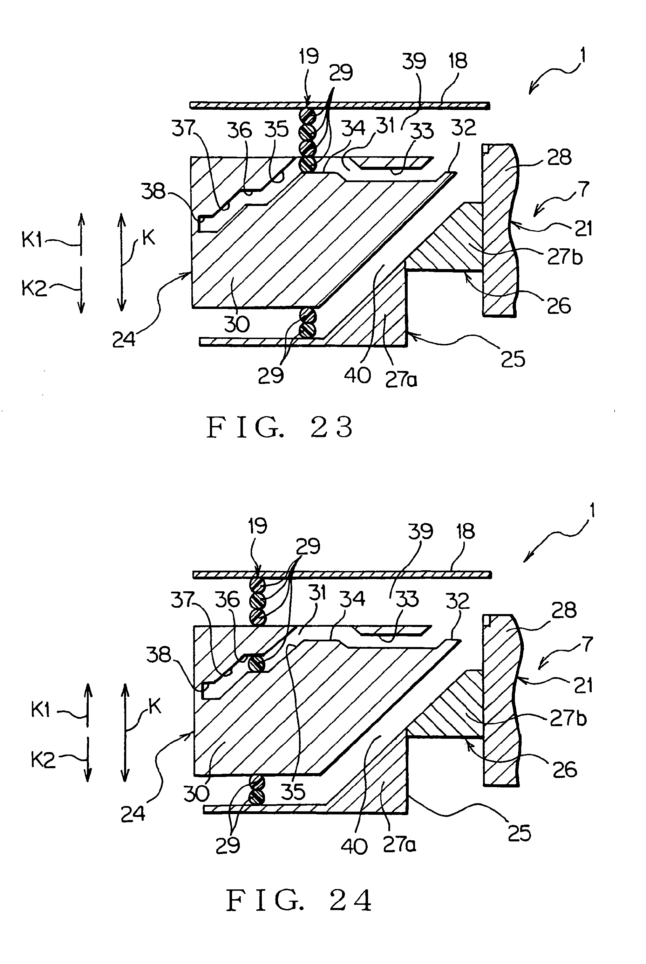

Then, as shown in FIG. 23, the projection 29 of the holder 19 holding the selected CD 2 is positioned on the pickup insertion part 34 of the guiding groove 31. At this time, the swinging chassis 17 is rotated about the one end thereof, and the other end of the swinging chassis 17, namely the turntable and the pickup playback part, is inserted between the selected CD 2 and the other CDs 2.

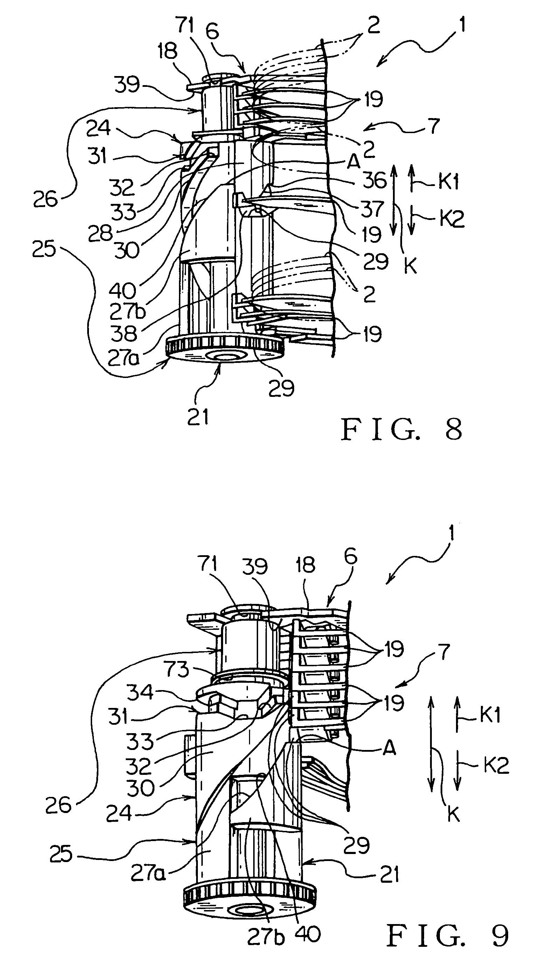

Then, the projection 29 of the holder 19 holding the selected CD 2 is passed through the first connecting part 35, and positioned in the clamp part 36. At this time, the turntable of the playback part 5 clamps the selected CD 2. Then, the locking nails 86, 87 and 89 of the holder 19 of FIG. 15 are saved outside the flange 85. Then, the projection 29 of the holder 19 holding the selected CD 2 is passed through the second connecting part 37, and as shown in FIGS. 8 and 25, positioned in the playback part 38.

Further, the projections 29 of the holders 19 holding the CDs 2 at the arrow K1 side are moved to an inner part of the first spaced groove 39, namely away from the connecting wall 28 owing to the wedge part 30 of the cam member 24. Further, the projections 29 of the holders 19 holding the CDs 2 at the arrow K2 side are moved to an inner part of the second spaced groove 40, namely away from the connecting wall 28 owing to the wedge part 30 of the cam member 24.

Then, as shown in FIGS. 8 and 25, the guiding groove 31 mounted on the wedge part 30 of the cam member 24 positions the holder 19 holding the selected CD 2. Further, the wedge part 30 of the cam member 24, the moving chassis 18, and the second walls 27, namely the first spaced groove 39 and the second spaced groove 40, remove the holder 19 holding the selected CD 2 from the other holders 19. Further, the first spaced groove 39 and the second spaced groove 40 positions the other holders 19.

Further, when the projection 29 of the holder 19 holding the selected CD 2 is positioned in the playback part 38, the holder 19 is moved away from the CD 2 clamped by the turntable of the playback part 5. Thus, the rotation of the CD 2 is prevented from being disturbed by the holder 19. As the turntable rotates the clamped CD 2, the optical pickup 66 of the pickup playback part reads the data from a desired position of the CD 2. When stopping the readout from the selected CD 2, the driving force of the motor 20 rotates the rotating member 25, the moving member 26, and the cam member 24 reversely.

As described the above, the separating mechanism 7 moves the cam member 24 along the arrow K, and expands or contracts the groove widths of the first spaced groove 39 and the second spaced groove 40, so that the separating mechanism 7 positions the holder 19 holding the desired CD 2, and moves the holder 19 away from the other holders 19. Thus, the separating mechanism 7 separates the holder 19 holding the selected CD 2 from the other holders 19 along the arrow K.

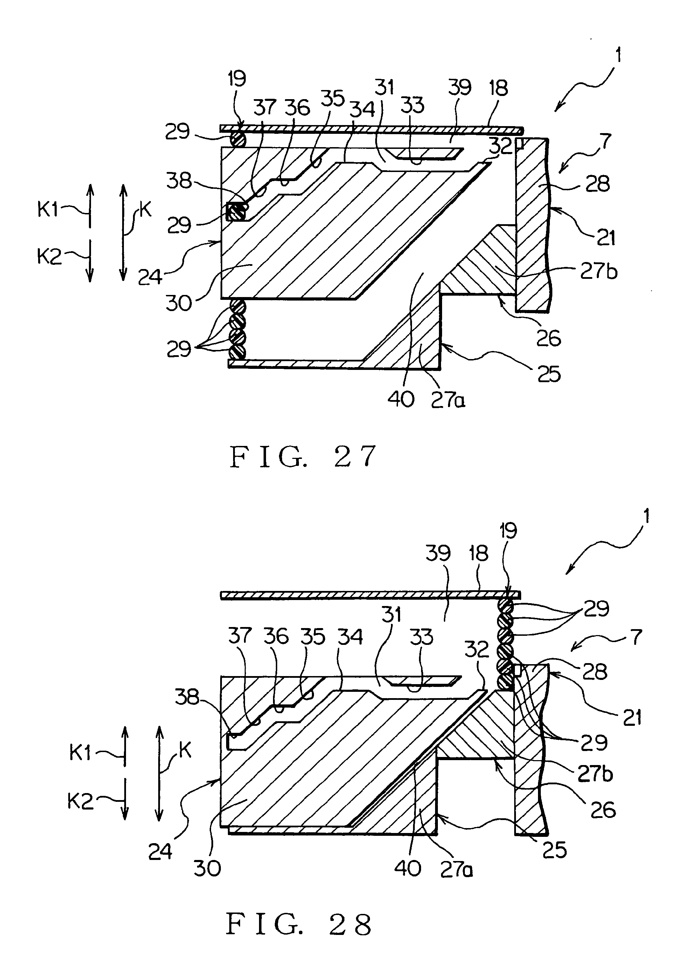

For example, as shown in FIG. 26, in a case when positioning the holder holding the second CD 2 from the bottom at the playback position, or as shown in FIG. 27, in a case that the holder holding the second CD 2 from the top at the playback position, the separating mechanism 7 separates in a similar manner. Incidentally, in cases shown in FIGS. 26 and 27, the first projections 43 is positioned in the first parallel part 49 as shown in FIGS. 36 and 37, and the second projection 45 is positioned in the second slope part 51.

Further, the CD changer 1 ejects the selected CD 2 from the main body of the playback apparatus 3 according to instructions from such as an operating part. As shown in FIGS. 6, 9, and 28, when inserting the CD 2 into the main body of the playback apparatus 3 and making the selected holder 19 hold the CD 2, the CD changer 1 positions the projections 29 of all the holders 19 at the horizontal part A of the second wall 27b by the driving force of the motor 20. Further, the other end of the swinging chassis 17 of the playback part 5, namely the turntable and the pickup playback part, is saved from the CDs 2.

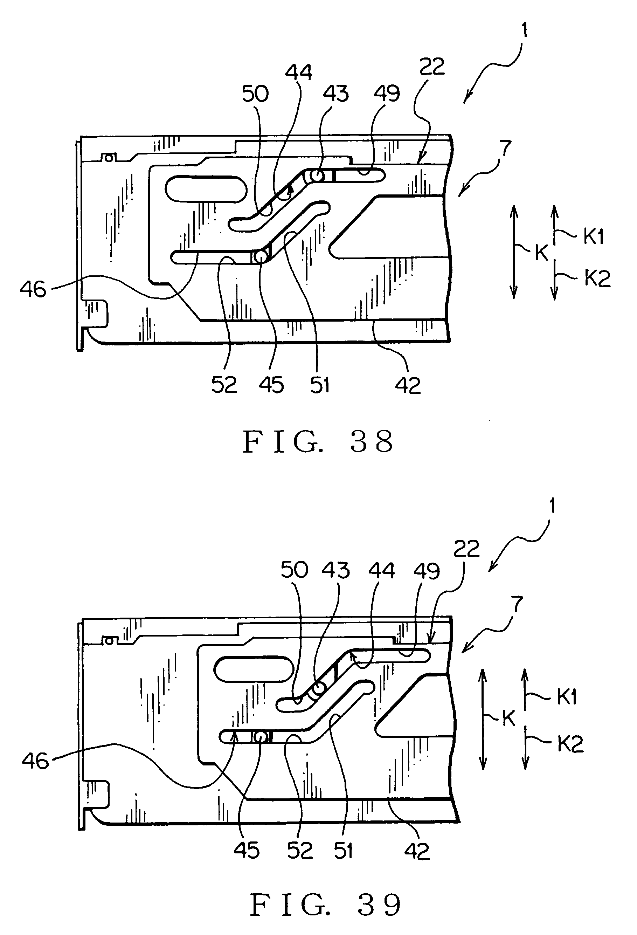

Then, as shown in FIG. 38, the driving chassis 42 is positioned in a manner that the second projection 45 is positioned in the second parallel part 52 of the second hole 46 by the driving force of the motor 41. Then, as shown in FIGS. 6, 9, and 28, the cam member 24 is moved the closest to the second wall 27a of the rotating member 25.

As shown in FIG. 39, owing to the driving force of the motor 41, the first projections 43 is moved in the first slope part 50 of the first holes 44, so that the driving chassis 42 is positioned in a position where the projection 29, of the holder 19 of which CD 2 is to be ejected, faces the 32 of the guiding groove 31 along the direction perpendicular to the arrow K.

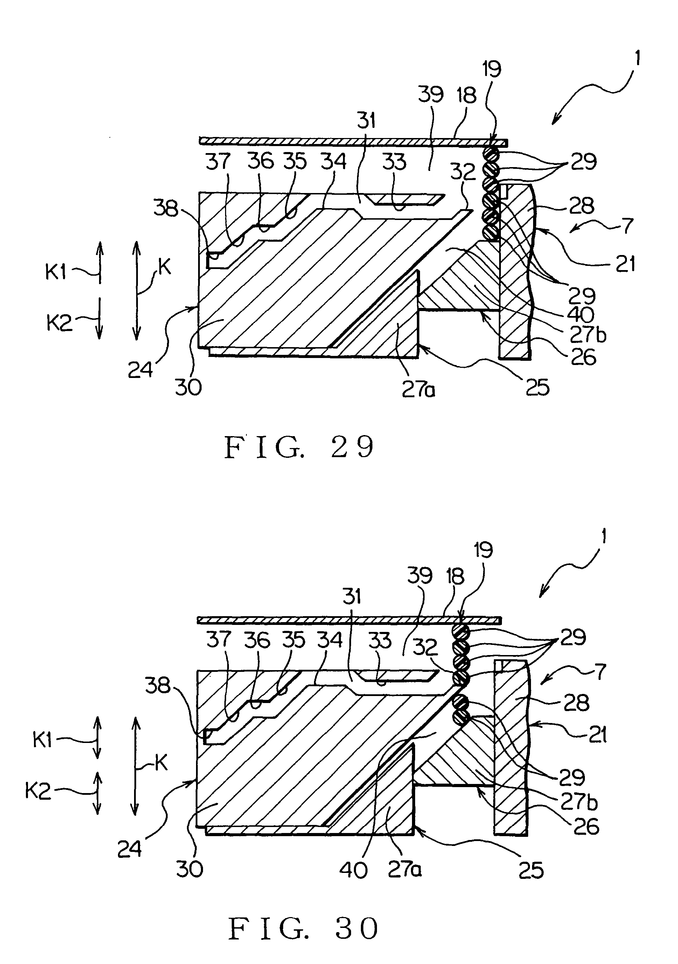

Then, as shown in FIGS. 6, 6, and 29, the guiding groove 31 of the cam member 24 faces the projection 29 of the selected holder 19 in a direction perpendicular to the arrow K. Incidentally, in FIGS. 6, 6, and 29, the projection 29 of the fourth holder 19 from the top faces the guiding groove 31 mounted on the cam member 24.

Then, the driving force of the motor 20 integrally rotates the rotating member 25, the moving member 26, and the cam member 24. Then, the projections 29 of all the holders 19 are gradually removed from the connecting wall 28. Then, as shown in FIG. 30, the projection 29 of the selected holder 19 is inserted into the opening part 32 of the guiding groove 31. Further, the projections 29 of the other holders 19 contact the wedge part 30 of the cam member 24, and owing to the wedge part 30 or the like, are moved in the first spaced groove 39 and the second spaced groove 40.

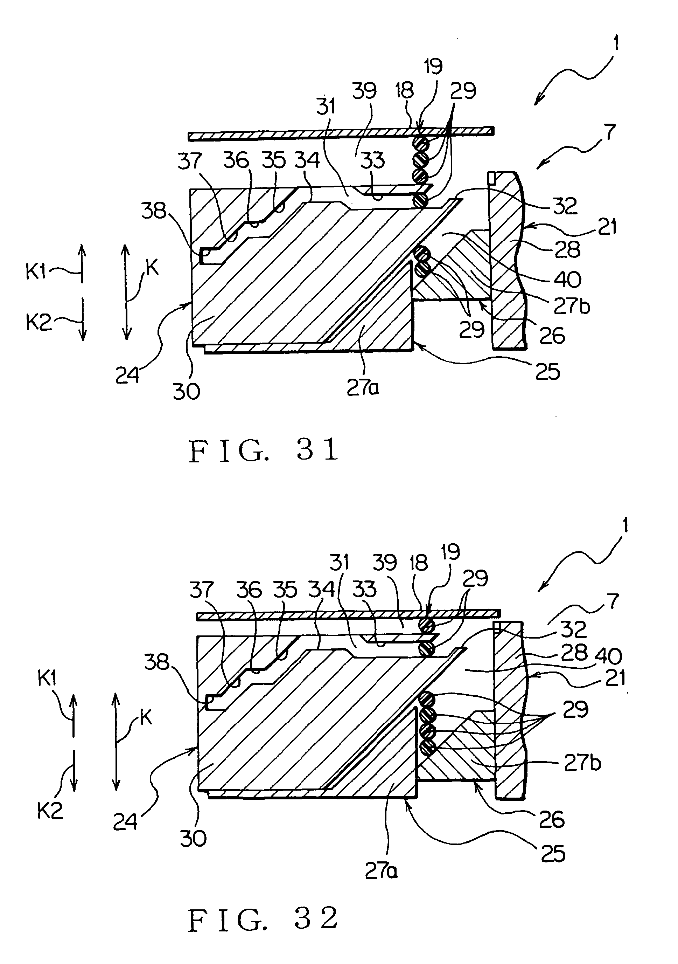

As shown in FIGS. 10 and 31, when the driving force of the motor 20 integrally rotates the rotating member 25, the moving member 26, and the cam member 24, the projection 29 of the selected holder 19 is positioned in the loading part 33 of the guiding groove 31. Further, the wedge part 30 of the cam member 24 moves the projections 29 of the other holders 19 to inner parts of the first spaced groove 39 and the second spaced groove 40, namely a position away from the connecting wall 28.

Then, as shown in FIGS. 10 and 31, the guiding groove 31 mounted on the wedge part 30 of the cam member 24 positions the selected holder 19 on the loading position. Further, the wedge part 30 of the cam member 24, the moving chassis 18, and the second walls 27, namely the first spaced groove 39 and the second spaced groove 40, removes the selected holder 19 from the other holders 19. Further, the first spaced groove 39 and the second spaced groove 40 positions the other holders 19.

Then, the driving force of the motor 41 rotates the roller 14 in a direction corresponding to loading or unloading of the CD 2. The CD 2 is loaded or unloaded into the main body 3 through the slot 10 by the rotation of the roller 14. The end 92a of the arm main body 92 pushes the CD 2 when the CD 2 is released from the roller 14. When stopping the loading and unloading of the CD 2, the rotation of the roller 14 is stopped and the driving force of the motor 20 rotates reversely the rotating member 25, the moving member 26, and the cam member 24.

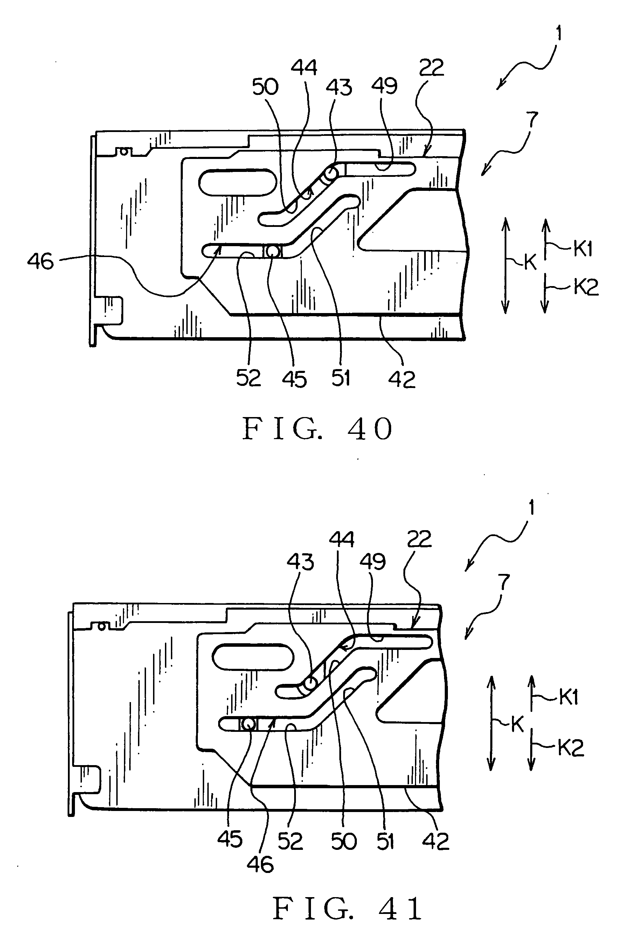

As described the above, by moving the cam member 24 along the arrow K, expanding and contracting the groove widths of the wedge part 30 and the second spaced groove 40, the desired holder 19 is positioned on the loading position, and separated from the other holders 19. For example, as shown in FIG. 32, in a case when positioning the second holder 19 from the top on the loading position, or as shown in FIG. 33, in a case when positioning the second holder 19 from the bottom, the cam member 24 works in a similar way. Further, in cases shown in FIGS. 32 and 33, the second projection 45 is positioned in the second parallel part 52 as shown in FIGS. 40 and 41, and the first projections 43 is positioned in the first slope part 50.

When the arbitrarily selected holder 19 with the oparating part holds the CD 2 inserted in the main body 3 of the CD changer 1, the cam member 24 is approached closest to the second wall 27a of the rotating member 25 and the guiding mechanism 91 of the moving chassis 16 is positioned closest to the second wall 27a, or the bottom wall 11. When the CD 2 is not loaded or ejected through the slot 10, the guiding part 94, or the pair of the guiding projections 96, of the guiding mechanism 91 is positioned outside the inner edge 85a with the urging force of the coil spring 95 as shown in FIG. 42. The other end 92a of the arm main body 92 is positioned away from the outer edge of the CD 2 with the cam of the lever attached to the load frame 100.

The projection 29 of the holder 19 holding the CD 2 inserted faces to the guiding groove 31 in the direction perpendicular to the arrow K. Then, the space between the pair of the guiding projections 96 of the guiding mechanism 91 lines to the retainer 84 of the holder 19 along the direction of movement of the CD 2 inserted.

Then, the driving force of the motor 20 integrally rotates the rotating member 25, the moving member 26, and the cam member 24 so as to position the projection 29 of the holder 19 inside the loading part 33 of the guiding groove 31. Further, the projections 29 of the other holders 19 contact the wedge part 30 of the cam member 24, and owing to the wedge part 30 or the like, are moved away from the ends of the first spaced groove 39 and the second spaced groove 40, or the connecting wall 28 to position the holder 19.

Then, the lever attached to the load frame 100 drives the arm main body 92 to rotate clockwise the arm main body 92 with the coil spring 95. The arm main body 92 is urged clockwise with the coil spring 95 but rotatable counterclockwise. Then, the roller 14 is rotated in the direction of inserting the CD 2 with the driving force of the motor 41 and the CD 2 is gradually received through the slot 10. As shown in FIG. 43, when the CD 2 is further inserted into the main body 3, the CD 2 abuts to the abutting part 93 and the arm main body 92 rotates to the direction of the arrow C against the urging force of the coil spring 95.

Then, as shown in FIG. 44, the guiding part 94, or the pair of the guiding projections 96 projects inwardly from the inner edge 85a of the flange 85. As shown in FIGS. 16-18, the guiding mechanism 91 interposes the second locking member 96, or the other end 80b of the holder body 80 between the pair of the guiding projections 96. The pair of the guiding projections 96 sandwich the second locking member 96, or the other end 80b.

As shown in FIG. 47, when the CD 2 is further inserted into the main body 3, the outer edge of the CD 2 enters between the pair of the guiding projections 96 and is guided on the retainer 84 of the holder 19. The pair of the guiding projections 96, and the guiding part 94 or the guiding mechanism 91 guide the CD 2 inserted into the main body 3 to the holder 19.

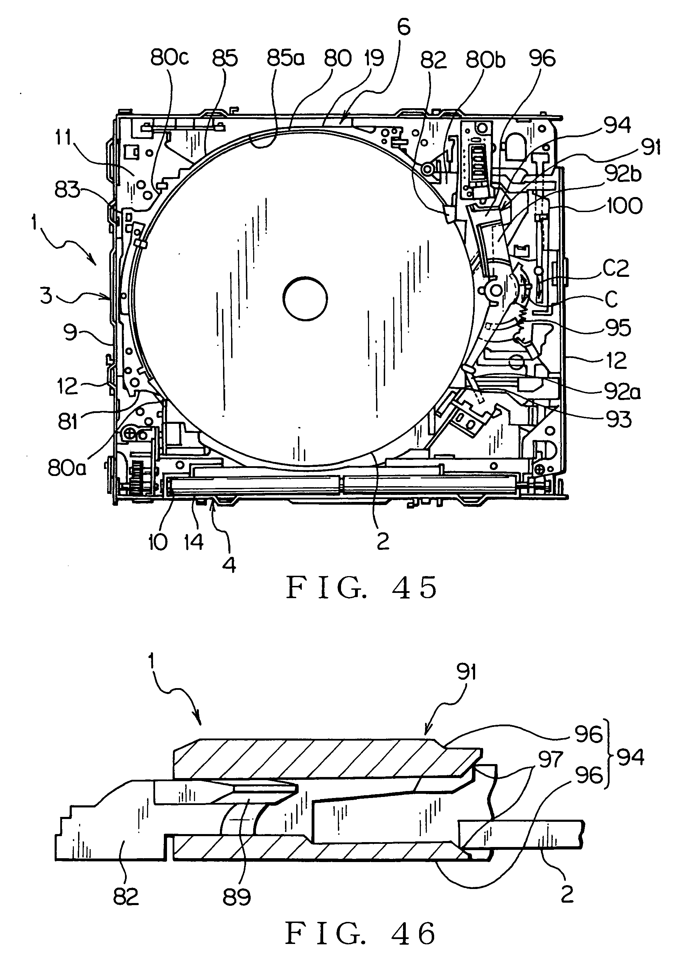

The locking members 81-83 lock the outer edge of CD 2 and the holder 19 holds the CD 2 on the retainer 84. As shown in FIG. 45, when the CD 2 completely held in the holder 19, the lever attached to the load frame 100 moves to make a space between the both ends 92a, 92b of the arm main body 92 and the outer edge of the CD 2. The pair of the guiding projections 96, or the guiding part 94, and the abutting part 93 are not projected inwardly from the inner edge 85a with the CD 2 being held on the holder 19 so that the holder 19 is permitted to move in the direction of the arrow K.

According to the present invention, the guiding mechanism 91 guides the inserted CD 2 to the holder 19. As a result, the CD 2 is assuredly guided to the holder 19 and held thereby with the large clearance between the slot 10 and the holder 19 even when the holder 19 becomes smaller.

The guiding mechanism 91 has the guiding part 94 projecting inwardly from the inner edge 85a of the flange 85 and the guiding part 94 guides the CD 2 to the holder 19. The pair of the projections 96 of the guiding part 94 have the spacing in the direction perpendicular to the surface of the CD 2 to position the CD 2. As a result, the CD 2 is assuredly guided to the holder 19 and held thereby with the large clearance between the slot 10 and the holder 19 even when the holder 19 becomes smaller.

The spacing between the pair of the projections 96 is wider along the direction of the slot 10 with the tapered face. Accordingly, when the CD 2 is inserted into the slot 10 and displaced with respect to the pair of the projections 96, the CD 2 abuts to the tapered face 97 as shown in FIG. 46. As a result, the CD 2 is assuredly guided to the holder 19 and held thereby with the large clearance between the slot 10 and the holder 19 even when the holder 19 becomes smaller.

The pair of the projections 96 receive the other end 80b of the holder body 80 and the second locking member 82 attached to the other end 80b so that the guiding part 94 and the holder 19 are positioned to each other. As a result, the CD 2 is assuredly guided to the holder 19 and held thereby with the large clearance between the slot 10 and the holder 19 even when the holder 19 becomes smaller.

The arm main body 92 is rotatable about the center thereof and has the abutting part 93 at the one end 92a thereof and the guiding part 94, or the pair of the guiding projections 96, at the other end 92b thereof. Thereby, when the CD 2 abuts to the abutting part 93, the arm main body 92 rotates in the direction, to which the guiding part 94 projects inwardly from the inner edge 85a of the flange 83. Accordingly, the guiding part 94 assuredly guides the CD 2 to the holder 19.

The projection 29 of the holders 19 holding the selected CD 2 is engaged with the guiding groove 31. The projections 29 of the holders at the arrow K1 side are engaged with the first spaced groove 39, and the projections 29 of the holders 19 at the arrow K2 side are engaged with the second spaced groove 40. Thus, the selected CD 2 is separated from the other CD 2, and the data from the selected CD is read out.

Further, the spaced groove expansion mechanism 21 varies the groove widths of the first spaced groove 39 and the second spaced groove 40 relatively. The sum of the groove widths of the first spaced groove 39 and the second spaced groove 40 is substantially equal to the product of the number of the holders 19 minus one by the width of the projection 29. Therefore, the holder 19 holding the selected CD 2 and the other holders 19 are positioned without any rattle.

Therefore, the spaced groove expansion mechanism 21 varies the groove widths of the first spaced groove 39 and the second spaced groove 40 relatively without mounting a coil spring, so that the holder 19 holding the selected CD 2 is separated from the other holders 19. Thereby, even when the CD changer 1 mounted on a vehicle is vibrated, the holders 19 is prevented from being vibrated. Therefore, the holder 19 holding the selected CD 2 is surely positioned on the playback position. Even when the vehicle is vibrated, the data on the CD 2 is surely read out.

The spaced groove expansion mechanism 21 includes the moving member 26 and the cam member 24 mounted on the moving member 26 movably along the arrow K. The first spaced groove 39 is formed between the moving chassis 18 mounted on the moving member 26 and the wedge part 30 of the cam member 24. The second spaced groove 40 is formed between the second walls 27 of the moving member 26 and the wedge part 30. The guiding groove 31 is formed on the wedge part 30 of the cam member 24.

Therefore, sliding the cam member 24 along the arrow K surely varies the groove widths of the first spaced groove 39 and the second spaced groove 40 relatively. Further, the cam member 24 slides according to the position of the holder 19 holding the selected CD 2. Therefore, the holder 19 holding the selected CD 2 is surely positioned on the playback position.

Because the cam member 24 and the optical pickup 66 are integrally moved, a relative position between the cam member 24 and the optical pickup 66 is kept constant. Therefore, the optical pickup 66 surely reads out the data from the CD 2 held by the holder 19 positioned on the playback position by the guiding groove 31 mounted on the cam member 24.

When reading out the data from the CD 2, the moving member 26 is moved toward the arrow K1 side, then the cam member 24 is slid corresponding to the position of the holder 19 holding the selected CD 2. Therefore, any CD 2 can be positioned on the playback position. Therefore, the data from any CD 2 can be read out.

Further, when loading or unloading the CD 2, the cam member 24 is moved toward the arrow K2, then the moving member 26 is slid corresponding to the positions of the cam member 24 and the holder 19 of the loaded or unloaded CD 2. Thus, a relative position between the holder 19 holding the loaded or unloaded CD 2 and the main body of the playback apparatus 3 is kept constant. Therefore, the CD 2 is surely loaded or unloaded through the slot 10, and the CD 2 inserted into the main body of the playback apparatus 3 is surely held by the holder 19.

Further, the cooperative moving mechanism 22 moves the holders 19 between the receiving position and the playback position, and positions the holder 19 at the loading position sequentially. Therefore, the number of the components and cost can be reduced. Further, two modes can be smoothly changed, one mode is moving the holders 19 between the receiving position and the playback position, and the other mode is loading or unloading the CD 2.

The cooperative moving mechanism 22 includes the driving chassis 42 having the first holes 44 and the second hole 46, the first projections 43 mounted on the moving chassis 18 of the disk receiver 6, and the second projection 45 mounted on the moving chassis 16 of the playback part 5. Each first hole 44 is composed of the first slope part 50 and the first parallel part 49, and the second hole 46 is composed of the second slope part 51 and the second parallel part 52.

When loading or unloading the CD 2, the second projection 45 is moved in the second parallel part 52, and the first projections 43 are moved in the first slope part 50. Therefore, when loading or unloading the CD 2, the moving chassis 18 of the playback part 5, namely the cam member 24 is positioned without sliding. Further, when loading or unloading the CD 2, the moving chassis 18 of the disk receiver 6 and the moving member 26, namely the holders 19 are moved along the arrow K.

Therefore, a relative position between the holder 19 holding the CD 2 loaded or unloaded and the main body of the playback apparatus 3 is kept constant. Accordingly, the CD 2 is surely loaded or unloaded through the slot 10, and the CD 2 inserted into the main body of the playback apparatus 3 is surely held by the holder 19.

When moving the holder 19 between the receiving position and the playback position, the first projections 43 are moved in the first parallel part 49, and the second projection 45 is moved in the second slope part 51. Thereby, when moving the holders 19 between the receiving position and the playback position, the moving chassis 18 of the disk receiver 6 and the moving member 26, namely the holders 19 are positioned without sliding. Further, when moving the holder 19 between the receiving position and the playback position, the moving chassis 16 of the playback part 5, namely the cam member 24 is moved along the arrow K. Therefore, any CD 2 can be positioned on the playback position and the data from any CD 2 can be read out.

The moving member 26 and the cam member 24 are formed in a cylinder shape. The moving chassis 18 and the second walls 27 are mounted on both edges of the moving member 26. The moving member 26, the cam member 24, and the rotating member 25 are arranged coaxially, and rotated integrally by the driving force of the motor 20. Thus, a rotation of the moving member 26, the rotating member 25, and the cam member 24 moves the holders 19 between the receiving position and the playback position. Therefore, a moving path of the moving member 26, the cam member 24, and the rotating member 25 can be minimized, and the main body of the playback apparatus 3, namely the CD changer 1 can be downsized.

Further, the motor 41 solely slides the cam member 24 and the moving member 26 along the arrow K. Therefore, the number of the components can be reduced, the CD changer 1 can be downsized, and the cost of the CD changer 1 can be reduced.

In the present embodiment, the CD changer 1 receives a plurality of CD 2. However, the present invention may be adapted to such as a MD changer receiving MDs (Mini Disc) or a playback apparatus for DVDs (Digital Versatile Disc) or the like. Moreover, of course, the present invention may be adapted to a playback apparatus receiving a single MD, or a single DVD.

In the present embodiment, the coil spring 95 is utilized for urging means. However, the urging means is not limited to the coil spring 95 but can utilize a resilient body such as a variety of springs or rubbers. The second locking member 82 is interposed between the pair of the guiding projections 96. The first and third locking members 81 and 83 can be interposed between the pair of the guiding projections 96. The part of the ends 80a and 80b of the holder 80 can be directly interposed between the pair of the guiding projections 96.

At least one pair of the guiding projections 96 can be disposed in contrast to the present embodiment. In the present invention, the CD 2 abuts to the abutting part 93 and the guiding part 94 projects inwardly from the inner edge 85a of the flange 85. Other mechanisms such as a cam mechanism can be utilized for projecting the guiding part 94 simultaneously with the insertion of the CD 2.

Further, in the present embodiment, the cam member 24, the rotating member 25, and the moving member 26 are formed in a cylinder shape, and rotated about the shaft for moving them. However, according to the present invention, the cam member 24, the rotating member 25, the moving member 26 and the like may be formed in such as a plate shape, and may be moved without rotation.

Further, in the present, the cam member 24 and the optical pickup 66 are integrally moved. However, according to the present invention, it is unnecessary that the cam member 24 and the optical pickup 66 are integrally moved. According to the present invention, it is essential to keep the relative position between the cam member 24 and the optical pickup 66 by moving them together.

Further, according to the present embodiment, owing to the cooperative moving mechanism 22, the cam member 24 and the moving member 26 are moved by a common driving force. However, according to the present invention, the cam member 24 and the moving member 26 are moved by respective driving forces.

According to the present embodiment, the CD changer 1 described below is attained.

Appendix 1: A CD changer 1 for a CD 2 comprising: a main body 3 having a slot 10 for letting into the CD 2; a holder 19 disposed in the main body 3 and for holding the CD 2; and a guiding mechanism 91 for guiding the CD 2 inserted through the slot 10 to the holder.

Appendix 2: The CD changer 1 as described in Appendix 1, wherein the holder 19 has an inner edge 85a abutting to an outer edge of the CD 2 and wherein the guiding mechanism 91 has a guiding part 94 for guiding the CD 2 inserted to the holder 19 by projecting the guiding part 94 inwardly from the inner edge 85a of the holder 19.

Appendix 3: The CD changer 1 as described in Appendix 2, wherein the guiding part 9 has a guiding projection 96 having a space along a direction perpendicular to a surface of the CD 2 with respect to the outer edge thereof when the guiding part 9 guides the CD 2 to the holder 19.

Appendix 4: The CD changer 1 as described in Appendix 3, wherein the guiding part 94 has a tapered face 97 gradually separating from the surface of the CD 2 toward the center of the CD 2.

Appendix 5: The CD changer 1 as described in Appendix 3 or 4, wherein the guiding mechanism 91 has a positioning means for positioning the guiding part 94 and the holder 19 so as to guide the CD 2 to the holder 19.

Appendix 6: The CD changer 1 as described in any one of appendices 2-5, wherein the guiding mechanism 91 has an arm main body 92 rotatably disposed on the main body 3 and the guiding part 94 disposed at an end of the arm main body 3, and the guiding part 94 projects inwardly from the edge of the holder 19 simultaneously with the CD 2 inserted through the slot 10.

Incidentally, the present embodiment only shows a typical embodiment of the present invention. The present invention is not limited to the present embodiment. Namely, it is possible to carry out the variations of the present invention without departing from a scope of the present invention.

## Claims

1. A playback apparatus for a recording medium comprising:
a main body having a slot for letting into the recording medium;
a holder disposed in the main body and for holding the recording medium; and
a guiding mechanism for guiding the recording medium inserted through the slot to the holder.

2. The playback apparatus as claimed in claim 1, wherein said holder has an edge abutting to an outer edge of the recording medium, and wherein said guiding mechanism has a guiding part for guiding the recording medium inserted through the slot to the holder by projecting the guiding part inwardly from the edge of the holder.

3. The playback apparatus as claimed in claim 2, wherein said guiding part has a guiding projection having a space along a direction perpendicular to a surface of the recording medium with respect to the outer edge thereof when the guiding part guides the recording medium to the holder.

4. The playback apparatus as claimed in claim 3, wherein said guiding part has a tapered face gradually separating from the surface of the recording medium toward the center of the recording medium.

5. The playback apparatus as claimed in claim 3 or 4, wherein said guiding mechanism has a positioning means for positioning the guiding part and the holder so as to guide the recording medium to the holder.

6. The playback apparatus as claimed in any one of claims 2-5, wherein said guiding mechanism has an arm main body rotatably disposed on the main body and the guiding part disposed at an end of the arm main body, and the guiding part projects inwardly from the edge of the holder simultaneously with the recording medium inserted through the slot.
